(19) **Europäisches Patentamt**

**European Patent Office**

**Office européen des brevets**

(11) **EP 1 617 497 A1**

(12) **EUROPEAN PATENT APPLICATION**
published in accordance with Art. 158(3) EPC

(43) Date of publication:
**18.01.2006 Bulletin 2006/03**

(21) Application number: **03780852.4**

(22) Date of filing: **17.12.2003**

(51) Int Cl.:
*H01M 4/02* [(1974.07)]    *H01M 4/38* [(1974.07)]
*H01M 4/04* [(1974.07)]    *H01M 10/40* [(1974.07)]
*H01M 4/64* [(1974.07)]

(86) International application number:
**PCT/JP2003/016186**

(87) International publication number:
**WO 2004/095612 (04.11.2004 Gazette 2004/45)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **23.04.2003 JP 2003117833**
**23.07.2003 JP 2003278615**
**30.07.2003 JP 2003282294**
**08.08.2003 JP 2003290726**
**19.09.2003 JP 2003327893**
**21.10.2003 JP 2003360938**
**02.12.2003 JP 2003403528**

(71) Applicant: **MITSUI MINING & SMELTING CO., LTD.**
**Tokyo 141-8584 (JP)**

(72) Inventors:
• **YASUDA, Kiyotaka,**
**c/o Mitsui Mng. & Smltg. Co. Ltd**
**Ageo-shi,**
**Saitama 362-0021 (JP)**
• **SAKAGUCHI, Yoshiki,**
**c/o Mitsui Mng. & Smltg Co Ltd**
**Ageo-shi,**
**Saitama 362-0021 (JP)**

• **MUSHA, Shinichi,**
**c/o Mitsui Mining & Smltg. Co Ltd**
**Ageo-shi,**
**Saitama 362-0021 (JP)**
• **DOBASHI, Makoto,**
**c/o Mitsui Mining & Smltg. Co Ltd**
**Ageo-shi,**
**Saitama 362-0021 (JP)**
• **MODEKI, Akihiro,**
**c/o Mitsui Mining & Smltg Co. Ltd**
**Ageo-shi,**
**Saitama 362-0021 (JP)**
• **MATSUSHIMA, Tomoyoshi,**
**c/o Mitsui Mg. & Sm. Co Ltd**
**Ageo-shi,**
**Saitama 362-0021 (JP)**
• **HONDA, Hitohiko,**
**c/o Mitsui Mining & Smltg Co. Ltd**
**Ageo-shi,**
**Saitama 362-0021 (JP)**
• **TAGUCHI, Takeo,**
**c/o Mitsui Mining & Smltg. Co. Ltd**
**Ageo-shi,**
**Saitama 362-0021 (JP)**

(74) Representative: **Forstmeyer, Dietmar et al**
**Boeters & Lieck,**
**Bereiteranger 15**
**81541 München (DE)**

(54) **NEGATIVE ELECTRODE FOR NONAQUEOUS ELECTROLYTE SECONDARY BATTERY, METHOD FOR MANUFACTURING SAME AND NONAQUEOUS ELECTROLYTE SECONDARY BATTERY**

(57) A negative electrode for nonaqueous secondary batteries is disclosed. The negative electrode has a pair of current collecting surface layers of which the surfaces are adapted to be brought into contact with an electrolyte and at least one active material layer interposed between the surface layers. The active material layer contains particles of an active material having high capability of forming a lithium compound. The material constituting the surfaces is preferably present over the whole thickness of the active material layer to electrically connect the surfaces so that the electrode exhibits a current collecting function as a whole. The surface layers each preferably have a thickness of 0.3 to 10 $\mu$m.

EP 1 617 497 A1

# Fig.1

**Description**

Technical Field:

The present invention relates to a negative electrode for nonaqueous secondary batteries including lithium ion secondary batteries. More particularly, it relates to a negative electrode providing a nonaqueous secondary battery which has high charge and discharge capacities from the initial stage, a high current collecting efficiency, an improved cycle life as a result of preventing the active material from falling off due to intercalation and deintercalation of lithium ions, and a high energy density. The present invention also relates to a process of producing the negative electrode and a nonaqueous secondary battery using the negative electrode.

Background Art:

A lithium ion secondary battery is used as a power source of mobile phones, notebook computers, etc. in view of its much higher energy density than other secondary batteries. In recent years, performance of portable electrical or electronic equipment has advanced rapidly, and the power consumption of such equipment has shown a remarkable increase. To cope with these tendencies, it is indispensable to develop a secondary battery with an increased capacity for use as a power source. The state-of-the-art lithium ion secondary batteries use a lithium-containing oxide in the positive electrode and a carbonaceous material (e.g., graphite) capable of intercalating lithium ions between layers of its crystal structure in the negative electrode. The currently available practical lithium secondary batteries have been achieving the theoretical capacities possessed by these materials, and development of a class of novel electrode materials has been awaited.

Sn alloys and Si alloys which offer 5 to 10 times the capacity potential of graphite have been actively developed. For example, JP-A-2002-260637 proposes a negative electrode for a lithium secondary battery which is obtained by applying a mixture of active material particles containing silicon or a silicon alloy and an electro-conductive powder of metal, such as copper or a copper alloy, to an electro-conductive metal foil, e.g., copper foil, as a current collector and sintering the mixture in a non-oxidative atmosphere. JP-A-2002-289178 proposes a negative electrode for a lithium secondary battery which is obtained by forming a thin tin film as an active material layer on a conductive metal foil, e.g., copper foil, as a current collector by electroplating and forming thereon a thin copper film by electroplating.

The negative electrode of JP-A-2002-260637 has the active material particles exposed to an electrolyte. Therefore, the active material particles are apt to fall off the negative electrode through repetition of volumetric expansion and contraction accompanying intercalation and deintercalation of lithium ions. As a result, a battery using the negative electrode tends to have a reduced cycle life. In addition, because the current collector used in the negative electrode has a relatively large thickness (10 to 100 $\mu$m), the proportion of the active material in the negative electrode is relatively small, which makes it difficult to increase the energy density. In the negative electrode of JP-A-2002-289178, the thin copper film covering the thin tin film (active material layer) is as thin as 0.01 to 0.2 $\mu$m and is distributed as islands. Therefore, the active material layer is exposed, for the most part, to an electrolyte. Hence, for the same reason as with the negative electrode of Patent Document 1, the active material is liable to fall off accompanying intercalation and deintercalation of lithium ions.

JP-A-8-50922 discloses a negative electrode prepared by forming a layer containing a metal element capable of making an alloy with lithium on a side of a current collector comprising a metal element incapable of making an alloy with lithium and forming thereon a layer of a metal element incapable of making an alloy with lithium. According to the disclosure, this layer structure prevents the layer containing the lithium alloy-forming metal element from cracking and pulverizing accompanying charge and discharge of a battery. Judging from the working Examples of the publication, however, because the outermost layer of the metal element incapable of forming a lithium alloy is as very thin as 50 nm, there is a possibility that the outermost layer fails to sufficiently cover the underlying layer containing the lithium alloy-forming metal element. In such a case, if the layer containing the lithium alloy-forming metal element cracks and crumbles due to charge and discharge processes of the battery, it would be impossible to sufficiently prevent fall-off of the layer. On the other hand, where the layer of the metal element incapable of forming a lithium alloy completely covers the layer containing the lithium alloy-forming metal element, the former layer would inhibit an electrolyte from penetrating into the latter layer, which will interfere with sufficient electrode reaction. No proposal has been made yet to satisfy these conflicting functions.

Apart from negative electrode materials, current collectors having appropriate surface roughness or fine through-holes are known for use in lithium ion secondary batteries. For example, JP-A-8-236120 proposes a current collector which is made of a porous electrolytic metal foil having pores winding across the thickness and making a three-dimensional network. The porous electrolytic metal foil is produced by a process including the steps of electrodepositing a metal on the surface of a rotating cathode drum to form an electrolytic foil of the metal and separating the foil from the drum, wherein an oxide film having a thickness of at least 14 nm is formed on the surface of the cathode drum exposed after separation of the foil, and the electrolytic metal foil is deposited on the oxide film. The porosity and pore size of the metal foil are dependent on the thickness of the oxide film formed on the cathode drum. Besides, the oxide film comes off little by little together with the foil. Therefore, it is difficult to control the porosity and pore size. Additionally, because the pores have a relatively small diameter and form a three-dimensional network, active material paste applied to one side of the foil and that applied to the other side hardly come into contact with each other. There seems to be a limit, therefore, in improving the adhesion between the paste and the foil.

In order to solve the problems associated with the above-described metal foil, Applicant previously proposed a porous copper foil formed by electroplating such that copper grains having an average planar grain size of 1 to 50 $\mu$m are two-dimensionally bonded to one another. The porous copper foil has an optical transmittance of 0.01 % or higher and a difference in surface roughness between the side in contact with a cathode for electroplating and the opposite side represented by Rz of 5 to 20 $\mu$m (see WO 00/15875). When the copper foil is used as a current collector of a lithium ion secondary battery, the following advantages are offered. (1) The copper foil is more permeable to an electrolyte so that a limited amount of an electrolyte is permitted to penetrate easily into an active material. (2) The copper foil hardly interferes with donation and acceptance of Li ions and electrons during charge and discharge. (3) Having proper surface roughness, the copper foil exhibits excellent adhesion to an active material. According to the process of making the porous copper foil, however, the electrolytic copper foil deposited on a cathode drum and separated from the drum is subjected to various processing treatments, which make the copper foil unstable. Therefore, the process cannot be seen as satisfactory in ease of handling the foil and fit for large volume production. Additionally, a nonaqueous secondary battery using a negative electrode prepared by applying a negative electrode active material mixture to the porous copper foil (a current collector) still has the problem that the negative electrode active material tends to fall off accompanying intercalation and deintercalation of lithium, resulting in reduction of cycle characteristics.

Disclosure of the Invention:

An object of the present invention is to provide a negative electrode for a nonaqueous secondary battery, a process of producing the negative electrode, and a nonaqueous secondary battery which are free of the various drawbacks associated with conventional techniques.

As a result of extensive investigations, the present inventors have found that the active material can be prevented from falling off through intercalation and deintercalation of lithium by interposing a layer of the active material between two surface layers which also function as a current collector. They have also found that, by so doing, the proportion of the active material in the whole electrode can be increased while retaining the current collecting function.

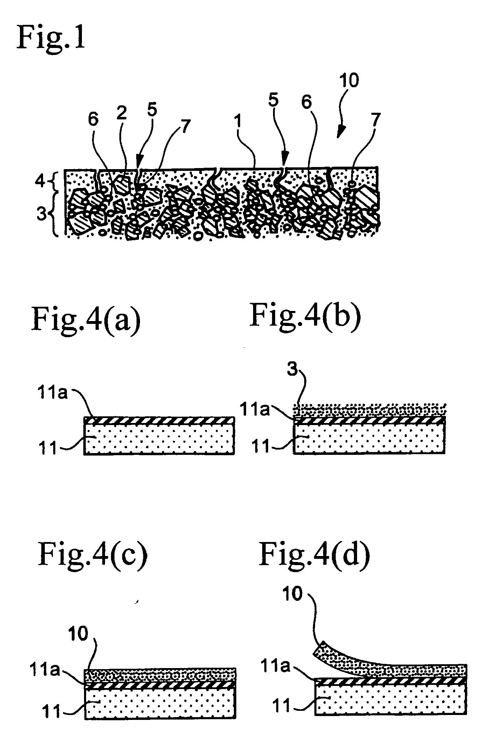

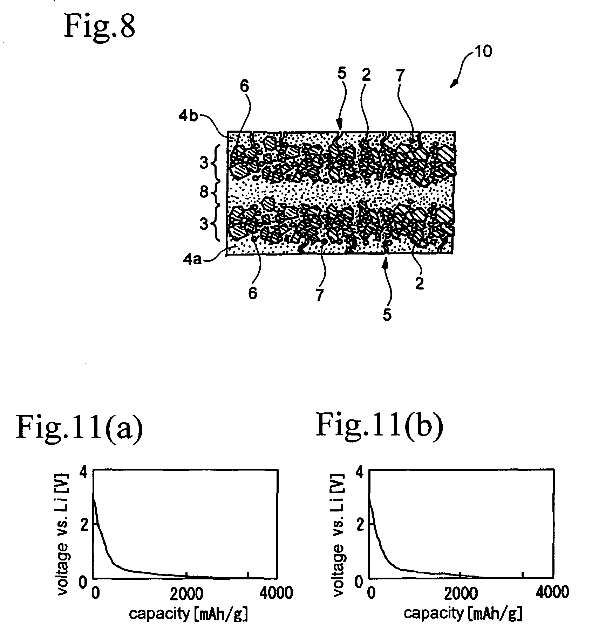

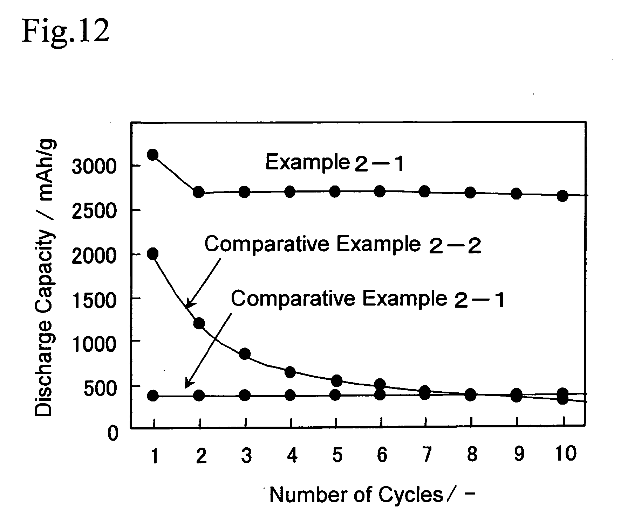

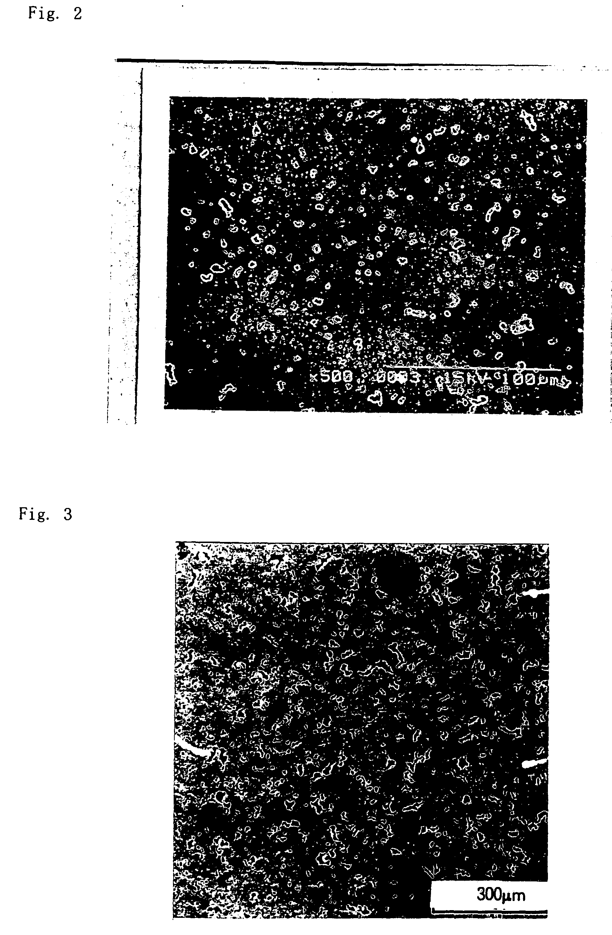

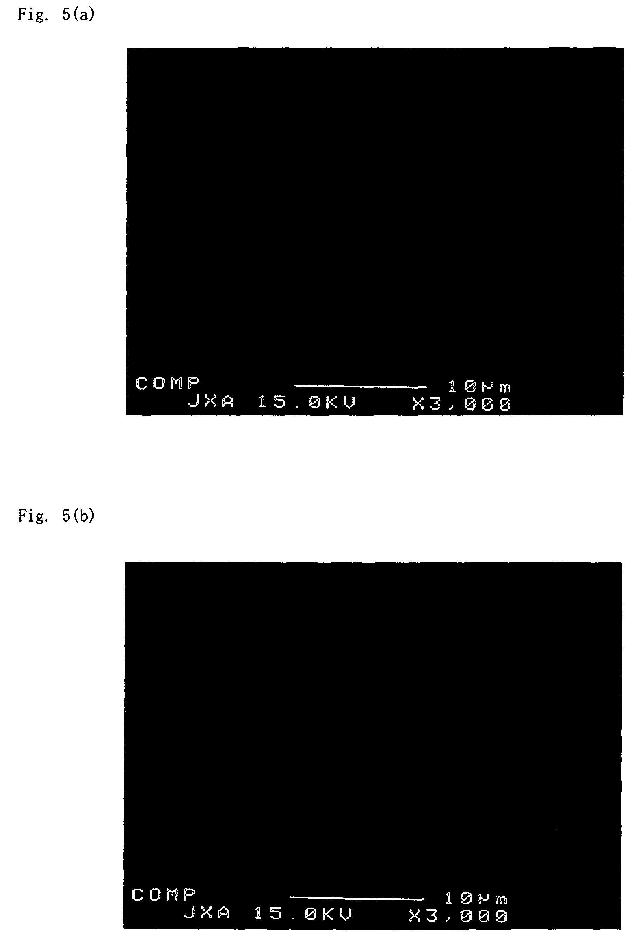

The above object of the invention is accomplished by providing a negative electrode for a nonaqueous secondary battery. The negative electrode has a pair of current collecting surface layers of which the surfaces are adapted to be brought into contact with an electrolyte and at least one active material layer interposed between the surface layers. The active material layer contains particles of an active material having high capability of forming a lithium compound. The negative electrode according to the present invention includes an embodiment shown in Fig. 1 and an embodiment shown in Fig. 8. The negative electrode of the embodiment shown in Fig. I does not have an electro-conductive metal foil layer as a core, whereas that shown in Fig. 8 has an electro-conductive metal foil layer as a core.

The present invention also provides a preferred process of producing the negative electrode, i.e., a process of producing a negative electrode for a nonaqueous secondary battery. The process comprises:

applying an electro-conductive slurry containing active material particles on a carrier foil to form an active material layer,
immersing the carrier foil having the active material layer formed thereon in a plating bath containing a metallic material to conduct electroplating to form an electrode containing the active material layer, and
separating the electrode from the carrier foil.

The present invention also provides another preferred process of producing the negative electrode, i.e., a process of producing a negative electrode for a nonaqueous secondary battery. The process comprises:

treating a carrier resin having a large number of cation exchange groups on the surface thereof with a metal ion-containing solution to form a metal salt of the cation exchange groups,
reducing the metal salt to form on the surface of the carrier resin a coating film of the metal serving as a catalyst nucleus,
electroplating the coating film with a metallic material having low capability of forming a lithium compound to form a first current collecting surface layer,
applying an electro-conductive slurry containing active material particles to the first current collecting surface layer to form an active material layer,

electroplating the active material layer with a metallic material having low capability of forming a lithium compound to form a second current collecting surface, and
separating the carrier resin from the first current collecting surface layer by peeling or dissolution.

The present invention also provides a nonaqueous secondary battery characterized by having the above-described negative electrode.

Brief Description of the Drawings:

Fig. 1 is an enlarged schematic view of an essential part of a negative electrode according to the first embodiment of the present invention.
Fig. 2 is an electron micrograph showing the surface of a negative electrode according to the present invention.
Fig. 3 is an electron micrograph showing the surface of another negative electrode according to the present invention.
Figs. 4(a) through 4(d) represent a flow chart illustrating an example of the process of producing the negative electrode shown in Fig. 1.
Figs. 5(a) and 5(b) are each an electron micrograph showing the cross-sectional structure of a negative electrode produced by the process illustrated in Figs. 4(a) to 4(d).
Figs. 6(a) through 6(f) are a flow chart illustrating another example of the process of producing a negative electrode according to the present invention.
Figs. 7(a) through 7(e) are a flow chart showing another process for forming a current collecting surface layer.
Fig. 8 is an enlarged schematic view of an essential part of a negative electrode according to the second embodiment of the present invention.
Fig. 9 is an electron micrograph taken of the cross-section of the negative electrode obtained in Example 2-1.
Figs. 10(a) and 10(b) are a scanning electron micrograph of the current collecting surface layer obtained in Example 3-1 and a photograph taken of the same layer with light transmitted therethrough, respectively.
Figs. 11(a) and 11(b) are graphs showing charging characteristics of the negative electrode obtained in Example 3-1 as measured on the surface layer side having been separated from a carrier foil and on the opposite plated side, respectively.
Fig. 12 is a graph showing the charge/discharge cycles vs. discharge capacity relationship of the negative electrodes obtained in Example 2-1 and Comparative Examples 2-1 and 2-2.

Best Mode for Carrying out the Invention:

The negative electrode of the invention for a nonaqueous secondary battery will be described based on its preferred embodiments. Fig. 1 is an enlarged schematic view of an essential part of a negative electrode according to the first embodiment of the present invention. While Fig. 1 represents only one side of the negative electrode, not showing the other side, the other side of the negative electrode has an almost similar structure.

The negative electrode 10 of the first embodiment has a pair of surfaces that are to come into contact with an electrolyte; a first surface 1 and a second surface 2 (not shown). The negative electrode 10 has an active material layer 3 containing active material particles 2 having high capability of forming a lithium compound between the two surfaces. The active material layer 3 is continuously coated on both sides thereof with a pair of current collecting surface layers 4 (only one of them is shown). The surface layers 4 contain the first surface 1 and the second surface 2, respectively. As is apparent from Fig. 1, the negative electrode 10 has no thick conductor film (e.g., a metal foil) for current collection called a current collector that has been used in conventional negative electrodes, such as those described in Patent Document 1 and Patent Document 2 supra.

The current collecting surface layers 4 serve for current collecting function of the negative electrode 2 of the subject embodiment. The surface layers 4 also serve to prevent the active material particles of the active material layer 3 from falling off due to their volumetric change during lithium ion intercalation/deintercalation cycling. The surface layers 3 are made of a metal capable of functioning as a current collector of a nonaqueous secondary battery, preferably of a lithium secondary battery. Such a metal includes metallic materials having low capability of forming a lithium compound, such as copper, nickel, iron, cobalt, and alloys of these metals. Of these metallic materials particularly preferred are copper, nickel, or an alloy thereof. Nickel is preferred for enhancing the strength of the electrode 10. Copper is preferred for increasing flexibility of the negative electrode 10. The two surface layers can be made of the same or different materials. The expression "low capability of forming a lithium compound" as used herein means no capability of forming an intermetallic compound or a solid solution with lithium or, if any, the capability is such that the resulting lithium compound contains only a trace amount of lithium or is very labile.

Each surface layer 4 is thinner than the thick conductor film that has been used for current collection in conventional electrodes. Specifically, it is preferably as thin as about 0.3 to 10 $\mu$m, particularly about 1 to 5 $\mu$m. With this minimum thickness, the active material layer can be covered substantially completely and continuously. The active material particles 2 can thus be prevented from falling off. Having such a small thickness and not having a thick conductor film for current collection, the negative electrode has an increased relative proportion of the active material, achieving an increased energy density per unit volume and per unit weight. Since conventional negative electrodes have a higher proportion of the thick conductor film for current collection, they encounter a limit in improving the energy density. The surface layers 4 with the above-recited small thickness are preferably formed by electroplating as described later. The two surface layers 4 may be equal or different in thickness.

As previously noted, the two surface layers 4 contain the first surface 1 and the second surface 2, respectively. These surfaces provide the outermost surfaces of the electrode according to the first embodiment. When the negative electrode 10 of this embodiment is assembled into a battery, the first and the second surfaces are brought into contact with an electrolyte to participate in electrode reaction. In contrast, in a conventional negative electrode, a current collecting thick conductor film which has an active material layer formed on both sides thereof does not come into contact with an electrolyte and therefore does not take part in electrode reaction. Where the thick conductor film has an active material layer formed on only one side thereof, there is only the other side left for contact with an electrolyte. In other words, the negative electrode 10 of the first embodiment has no current collecting thick conductor film that has been used in conventional negative electrodes. Instead, the layers present on the outer surfaces of the negative electrode 10, i.e., the surface layers 4 participate in electrode reaction with a combined function to prevent the active material from falling off.

Since the surface layers 4 containing the first surface 1 and the second surface 2, respectively, each perform a current collecting function, there is an advantage that a lead wire can be connected to either surface layer 4 in assembling the negative electrode 10 of the first embodiment into a battery.

As shown in Fig. 1, the negative electrode 10 has a great number of microvoids 5 which are open on the first surface 1 and the second surface 2 and lead to the active material layer 3. The microvoids 5 are formed in each current collecting surface layer 4 to extend in the thickness direction of the surface layer 4. A nonaqueous electrolyte is allowed to sufficiently penetrate the active material layer 3 through these microvoids 5 and to sufficiently react with the active material particles 2. The microvoids 5 are very small as having a width of about 0.1 $\mu$m to about 10 $\mu$m as observed on a cut section of the surface layer 4. Small as they are, the microvoids 5 have such a width as to allow a nonaqueous electrolyte to penetrate. That said, a nonaqueous electrolyte has a smaller surface tension than an aqueous one so that it is capable of penetrating sufficiently through the microvoids 5 with such a small width. The microvoids 5 can be made by various processes mentioned infra. They are preferably formed simultaneously with electroplating to form the surface layers 4.

When the first surface 1 and the second surface 2 are observed from above through an electron microscope, it is desirable for the microvoids 5 of at least one of the surfaces to have an average opening area of 5 of 0.1 to 100 $\mu$m$^2$, preferably 0.1 to 50 $\mu$m$^2$, still preferably 0.1 to 20 $\mu$m$^2$, particularly preferably 0.1 to 20 $\mu$m$^2$, especially preferably about 0.5 to 10 $\mu$m$^2$. Within this range of opening area, the active material particles 2 are effectively prevented from falling off while securing sufficient penetration of a nonaqueous electrolyte, and improved charge and discharge capacities can be obtained from the initial stage of charge/discharge cycles. To prevent fall-off of the active material particles 2 more effectively, the average opening area of the microvoids 5 is preferably 0.1 to 50%, particularly 0.1 to 20%, of the maximum cross-sectional area of the active material particles 2. The term "maximum cross-sectional area of the active material particles 2" denotes a maximum cross-sectional area of a sphere having a diameter corresponding to the particle size ($D_{50}$) of active material particles 2.

When one of the first surface 1 and the second surface 2 which satisfies the above-specified average opening area condition is observed under an electron microscope, the ratio of the total opening area of the microvoids 5 in the visual field to the area of the visual field (i.e., the open area ratio) is 0.1 to 20%, preferably 0.5 to 10%. The reason for this is the same as for specifying the range of the opening area of the microvoids 5. For the same reason, it is preferable that one of the first surface 1 and the second surface 2 which satisfies the above-specified average opening area should have 1 to 20,000, particularly 10 to 1,000, especially 50 to 500, microvoids 5 in every 100 $\mu$m-side square in the visual field under an electron microscope. The number of the microvoids 5 as defined above is referred to as a distribution. A photograph taken of the surface of a negative electrode according to the present invention under an electron microscope is shown in Fig. 2. The tiny black spots are the openings of microvoids 5. The photograph of Fig. 2 was of the negative electrode produced in accordance with the procedure of Example 1 given later. Fig. 3 presents a photograph taken of the surface of another negative electrode according to the present invention under electron microscopic observation.

As can be seen from Figs. 2 and 3, the presence of the microvoids 5 can be confirmed through electron microscopic observation. In some cases, nevertheless, the microvoids 5 are too tiny in their width to observe under an electron microscope. In such cases, the present invention adapts the following method for confirming microvoids 5. A negative electrode to be evaluated is assembled into a battery, and the battery is subjected to one charge/discharge cycle. The cross-section of the negative electrode is then observed with an electron microscope. If any change in cross-sectional structure is observed between before and after the cycle, the negative electrode before the charge/discharge cycle is judged to have had microvoids 5. The grounds of this judgement are that the change of the cross-sectional structure due to the charge/discharge cycle is a result from the nonaqueous electrolyte's reaching the active material layer 3 through the microvoids 5 distributed in the negative electrode before the charge and discharge and causing the lithium ions present therein to react with the active material particles 2.

The active material layer 3 positioned between the first surface 1 and the second surface 2 contains particles 2 of an active material having high capability of forming a lithium compound. The active material includes silicon materials, tin materials, aluminum materials, and germanium materials. Covered with the two surface layers 4, the active material is effectively prevented from falling off the active material layer 3 as a result of lithium ion intercalation and deintercalation by the active material. Since the active material particles 2 can meet the electrolyte coming through the microvoids 5, they are not hindered from electrode reaction.

The maximum particle size of the active material particles 2 is preferably 50 $\mu$m or smaller, still preferably 20 $\mu$m or smaller. The particle size, represented in terms of $D_{50}$ value, of the particles 2 is preferably 0.1 to 8 $\mu$m, still preferably 1 to 5 $\mu$m. Where the maximum particle size exceeds 50 $\mu$m, the particles 2 are liable to fall off, resulting in reduction of electrode life. The lower limit of the particle size is not particularly specified. The smaller, the better. In the light of the process of making the particles 2, the lower limit would be about 0.01 $\mu$m. The particle size of the particles 2 can be measured by a Microtrac method under scanning electron microscopic (SEM) observation.

There is a tendency that too small a proportion of an active material in a negative electrode makes it difficult to sufficiently improve battery energy density. On the other hand, the active material, if used too much, tends to fall off. Taking these tendencies into consideration, the amount of the active material is preferably 5 to 80% by weight, still preferably 10 to 50% by weight, particularly preferably 20 to 50% by weight, based on the total weight of the negative electrode.

The thickness of the active material layer 3 is subject to adjustment in accordance with the proportion of the active material to the whole negative electrode and the particle size of the active material. While not critical in the subject embodiment, it is usually about 1 to 100 $\mu$m, particularly about 3 to 40 $\mu$m. As hereinafter described, the active material layer 3 is preferably formed by applying an electro-conductive slurry.

The total thickness of the negative electrode inclusive of the surface layers 4 and the active material layer 3 is preferably about 2 to 50 $\mu$m, still preferably about 10 to 50 $\mu$m, for obtaining enhanced negative electrode strength and increased energy density.

It is preferred that the active material layer 3 be impregnated with the material making up the surface layers 4 containing the first surface 1 and the second surface 2, respectively, throughout its thickness and that the active material particles 2 be present in the impregnating material. That is, it is preferred that the active material particles 2 be not substantially exposed on the outer surfaces of the negative electrode 10 and be embedded inside the surface layers 4. In that preferred state, the active material layer 3 and the surface layers 4 are firmly united, and fall-off of the active material is prevented more. Furthermore, since the impregnating material in the active material layer 3 secures electron conductivity between the surface layers 4 and the active material, the active material is effectively prevented from being electrically isolated in parts, especially in the depth of the active material layer 3. The current collecting function is thus maintained. As a result, reduction in function as a negative electrode is suppressed, and the life of the negative electrode is extended. This is particularly advantageous in using, as an active material, a material that is semi-conductive and poor in electron conductivity, such as a silicon material. As is obviously understood from the foregoing description, the negative electrode of the first embodiment is utterly different in structure from a conventional negative electrode formed by electroplating both sides of a foamed metal having carried thereon active material particles. In the conventional negative electrode using such a foamed metal, because it is not easy to sufficiently closely adhere active material particles to the skeleton of the foamed metal, it is difficult to obtain increased electron conductivity, and the performance of the active material is hardly made effective use of.

It is preferred that the material making up the current collecting surface layers penetrates the thickness of the active material layer 3 to connect the two surface layers 4. In this case, the two surface layers 4 are electrically connected via the penetrating material, and the negative electrode exhibits enhanced electron conductivity as a whole. That is, the negative electrode 10 of this embodiment performs a current collecting function as a whole. The fact that the material constituting the current collecting surface layers 4 is present over the whole thickness of the active material layer to connect the two surface layers can be confirmed by mapping the material using an electron microscope. A preferred method for penetrating the material making the current collecting surface layers 4 into the active material layer will be described later.

It is preferred that the interstices between the individual active material particles 2 in the active material layer 3 be not fully filled with the constituent material of the surface layers 4 but leave voids 6. It should be noted that the voids are different from the microvoids 5 formed in the current collecting surface layers 4. The voids 6 serve to relax the stress resulting from volumetric expansion and contraction of the active material particles 2 due to intercalation and deintercalation of lithium. In this connection, the proportion of the voids 6 in the active material layer 3 is preferably about 5 to 30% by volume, still preferably about 5 to 9% by volume. The proportion of the voids 6 is obtained through mapping under an electron microscope. Because the active material layer 3 is formed by applying an electro-conductive slurry containing the active material particles 2 followed by drying as described later, the voids 6 are of necessity generated in the active material layer 3. Accordingly, the proportion of the voids 6 can be regulated within the recited range by properly selecting, for example, the particle size of the active material particles 2, the composition of the conductive slurry, and the coating condition of the slurry. It is also possible to adjust the proportion of the voids 6 by pressing the active material layer 3, formed by applying and drying the slurry, under appropriate conditions.

The active material layer 3 preferably contains particles 7 of an electro-conductive carbonaceous or metallic material in addition to the active material particles 2. Incorporation of the conductive component adds improved electron conductivity to the negative electrode 10. From this viewpoint, the amount of the conductive carbonaceous or metallic material particles 7 is preferably 0.1 to 20% by weight, still preferably 1 to 10% by weight. The conductive carbonaceous material includes acetylene black and graphite. To ensure the improvement on electron conductivity, it is preferred for the electro-conductive particles to have a particle size of 40 $\mu$m or smaller, particularly 20 $\mu$m or smaller. The lower limit of the particle size is not critical, which means the smaller, the better. In the light of the process of making the particles, the lower limit would be about 0.01 $\mu$m.

The particulars of the active material will then be described. In using a silicon material or a tin material as an active material as stated, the silicon material and tin material include (a) particles of single silicon or single tin, (b) mixed particles containing at least silicon or tin and carbon, (c) mixed particles of silicon or tin and a metal, (d) particles of a compound containing silicon or tin and a metal, (e) mixtures of particles of a compound containing silicon or tin and a metal and metal particles, and (f) single silicon or single tin particles coated with a metal. Compared with the particles (a), use of the particles (b) to (f) is advantageous in that cracking and pulverizing of the silicon material due to intercalation and deintercalation of lithium is suppressed more and that poor electron conductivity of silicon, which is semiconductive, can be compensated for.

In particular, where the mixed particles (b) containing at least silicon or tin and carbon are used as silicon or tin material particles, the cycle life and the negative electrode capacity are improved for the following reason. Carbon, especially graphite, which is used in a negative electrode of nonaqueous secondary batteries, contributes to intercalation and deintercalation of lithium, provides a negative electrode capacity of about 300 mAh/g, and is additionally characterized by its very small volumetric expansion on lithium intercalation. Silicon, on the other hand, is characterized by as high a negative electrode capacity as about 4200 mAh/g, 10 times or more the negative electrode capacity of graphite. Nevertheless, volumetric expansion of silicon on lithium intercalation reaches about 4 times that of graphite. Then, silicon or tin and carbon such as graphite are mixed at a predetermined ratio and ground by, for example, mechanical milling to obtain uniformly mixed powder having a particle size of about 0.1 to 1 $\mu$m. When this mixed powder is used as an active material, the volumetric expansion of silicon or tin on lithium intercalation is relaxed by graphite to provide improved cycle life, and a negative electrode capacity ranging about 1000 to 3000 mAh/g is obtained. The amount of silicon or tin in the mixed powder is preferably 10 to 90% by weight, still preferably 30 to 70% by weight, particularly preferably 30 to 50% by weight. The amount of carbon in the mixed particles is preferably 10 to 90% by weight, still preferably 30 to 70% by weight, particularly preferably 50 to 70% by weight. Increased battery capacity and extended negative electrode life will be secured with the mixed particles composition falling within the above range. There is formed no compound such as silicon carbide in the mixed particles.

The mixed particles (b) as a silicon or tin material may be a multi-component mixture containing other metal element(s) in addition to silicon or tin and carbon. The other metal element is at least one element selected from the group consisting of Cu, Ag, Li, Ni, Co, Fe, Cr, Zn, B, Al, Ge, Sn, In, V, Ti, Y, Zr, Nb, Ta, W, La, Ce, Pr, Pd, and Nd. These elements will hereinafter be inclusively referred to as a "dopant metal(s)".

In using the mixed particles (c) of silicon or tin and a metal as a silicon or tin material, the metal in the mixed particles (c) is at least one of the above-recited dopant metals. Preferred of the dopant metals are Cu, Ag, Ni, Co, and Ce. It is particularly desirable to use Cu, Ag or Ni for their excellent electron conductivity and low capability of forming a lithium compound. Use of Li as a dopant metal is also preferred. In this case, the active material contains metallic lithium from the beginning, which produces advantages, such as reduction of irreversible capacity, improvement on charge/discharge efficiency, and reduction in volumetric change leading to improved cycle life. In the mixed particles (c) of silicon or tin and a metal, the amount of silicon or tin is preferably 30 to 99.9% by weight, still preferably 50 to 95% by weight, particularly preferably 85 to 95% by weight. The amount of the dopant metal is preferably 0.1 to 70% by weight, still preferably 5 to 50% by weight, particularly preferably to 15% by weight. Increased battery capacity and extended negative electrode life will be secured with the mixed particles composition falling within the above range.

The mixed particles (c) of silicon or tin and a metal can be prepared as follows. Silicon particles or tin particles and dopant metal particles are mixed simultaneously with grinding by use of a pulverizer, including an attritor, a jet mill, a cyclon mill, a paint shaker, and a fine mill. The particles before grinding preferably have a particle size of about 20 to 500 $\mu$m. Mixing and grinding in a pulverizer result in formation of uniformly mixed powder of silicon or tin and the dopant metal. The particle size of the resulting powder can be adjusted to, e.g., 40 $\mu$m or smaller by properly controlling the operation conditions of the pulverizer. There are thus prepared the mixed particles (c).

Where the silicon material or tin material is (d) particles of a compound containing silicon or tin and a metal, the compound includes an alloy of silicon or tin and a metal, which is any one of (i) a solid solution of silicon or tin and the metal, (ii) an intermetallic compound of silicon or tin and the metal, and (iii) a composite having at least two phases selected from a single phase of silicon or tin, a single phase of the metal, a solid solution of silicon or tin and the metal, and an intermetallic compound of silicon or tin and the metal. The metal can be selected from those recited above as dopant metals used in the silicon or tin/metal mixed particles (c). Similarly to the mixed particles (c), the silicon or tin/metal compound particles preferably comprise 30 to 99.9% by weight of silicon or tin and 0.1 to 70% by weight of the metal. A still preferred composition of the compound is selected appropriately according to the process of producing the compound particles. For instance, where the compound is a silicon or tin/metal binary alloy prepared by a quenching process described infra, a preferred amount of silicon or tin is 40 to 90% by weight, and a preferred amount of the dopant metal is 10 to 60% by weight.

Where the compound is a ternary or polyatomic alloy containing silicon or tin and metals, the above-described binary alloy contains a small amount of at least one element selected from the group consisting of B, Al, Ni, Co, Sn, Fe, Cr, Zn, In, V, Y, Zr, Nb, Ta, W, La, Ce, Pr, Pd, and Nd. Such an additional component produces an additional effect in controlling cracking and pulverizing of the active material. To enhance the effect, a preferred amount of the additional component in the silicon or tin/metal alloy is 0.01 to 10% by weight, particularly 0.05 to 1.0% by weight.

Where the silicon or tin/metal compound particles (d) are alloy particles, the alloy particles are preferably prepared by a quenching process hereinafter described. The quenching process is advantageous in that the resulting alloy crystallites have a small size and are uniformly dispersible to provide an active material layer that will be prevented from cracking and pulverizing and maintain electron conductivity. The quenching process starts with preparing a molten metal of raw materials including silicon or tin and a dopant metal by high frequency melting. The ratio of silicon or tin and the dopant metal in the molten metal is selected from the above-specified range. The molten metal temperature is preferably 1200 to 1500°C, still preferably 1300 to 1450°C, in connection to the quenching conditions. An alloy is made from the molten metal by casting. That is, the molten metal is poured into a copper- or iron-made mold and quenched to obtain an ingot of a silicon or tin alloy, which is ground and sieved to obtain particles, e.g., of 40 $\mu$m or smaller for use in the present invention.

A roll casting process can be used instead of the casting process. In a roll casting process, the molten metal is injected onto the peripheral surface of copper-made twin rolls rotating at a high speed. For quenching the molten metal, the rotating speed of the rolls is preferably 500 to 4000 rpm, still preferably 1000 to 2000 rpm, which correspond to 8 to 70 m/sec and 15 to 30 m/sec, respectively, in terms of peripheral speed of the rolls. When the molten metal having the above-specified temperature is quenched on the rolls rotating at the above-specified speed, the cooling rate reaches $10^2$ K/sec or higher, particularly $10^3$K/sec or higher. The injected molten metal is rapidly cooled on the rolls into a thin sheet, which is ground and sieved to obtain particles having a particle size, e.g., of 40 $\mu$m or smaller for use in the present invention. Particles of desired size can also be prepared by a gas atomization process instead of the quenching process. In a gas atomization process, a jet of an inert gas such as argon is applied to the molten metal at 1200 to 1500°C under a gas pressure of 5 to 100 atm to atomize and quench the molten metal. Alternatively an arc melting process or mechanical milling can also be used.

Where the active material particles are the mixed particles (e) composed of particles of a compound containing silicon or tin and a metal and metal particles, the compound particles described with respect to the particles (d) and the metal particles described with respect to the mixed particles (c) can be used in the mixed particles (e). The metal element contained in the compound particles and the metal element of the metal particles may be either the same or different. In particular, when the metal element of the compound particles is nickel, copper, silver or iron, and the metal element of the metal particles is nickel, copper, silver or iron, these metals easily form a network structure in the active material layer. Such a metal network structure is effective in improving the electron conductivity and preventing fall-off of the active material particles due to volumetric expansion and contraction. Taking this effect into consideration, it is preferred that the metal element in the compound particles and that of the metal particles be the same. The active material particles (e) are obtained by first preparing compound particles in the same manner as for those of the particles (d) and then mixing the compound particles with metal particles in the same manner as for the production of the mixed particles (c). The silicon or tin to metal ratio in the compound particles can be the same as in the compound particles (d). The compound particles to metal particles ratio can be the same as the ratio of silicon or tin particles to metal particles in the mixed particles (c). With respect to other particulars of the active material particles (e), the description given to the mixed particles (c) and the compound particles (d) apply appropriately.

Where the silicon material or tin material is (f) the single silicon or single tin particles coated with a metal (hereinafter "metal-coated particles"), the coating metal is selected from the above-recited dopant metals used in the particles (c) and (d), for example, copper, provided that Li is excluded. The amount of silicon or tin in the metal-coated particles is preferably 70 to 99.9% by weight, still preferably 80 to 99% by weight, particularly preferably 85 to 95% by weight. The amount of the coating metal, such as copper, is preferably 0.1 to 30% by weight, still preferably 1 to 20% by weight, particularly preferably 5 to 15% by weight. The metal-coated particles can be prepared by, for example, electroless plating. In carrying out the electroless plating, a plating bath having silicon particles or tin particles suspended therein and containing a coating metal (e.g., copper) is prepared. The silicon particles or tin particles are electroless plated in the plating bath to deposit the coating metal on the surface of the silicon particles or tin particles. A preferred concentration of the silicone particles or tin particles in the plating bath is about 400 to 600 g/l. In electroless plating with copper as a coating metal, a plating bath containing copper sulfate, Rochelle salt, etc. is preferably used. A preferred concentration of copper sulfate or Rochelle salt is 6 to 9 g/l or 70 to 90 g/l, respectively, from the viewpoint of plating rate control. From the same viewpoint, the plating bath preferably has a pH of 12 to 13 and a temperature of 20 to 30°C. The plating bath contains a reducing agent, such as formaldehyde, in a concentration of about 15 to 30 cc/l.

Where the active material particles 7 are silicon-containing particles, it is preferred for the particles to have an average particle size ($D_{50}$) of 0.1 to 10 $\mu$m, particularly 0.3 to 8 $\mu$m, especially 0.8 to 5 $\mu$m, whichever of the forms (a) to (e) the silicon-containing particles may be. That is, the active material particles are fine particles with a small diameter (hereinafter referred to as "small-diametered active material particles"). Use of such small-diametered active material particles in a negative electrode results in reduced fall-off of the active material particles and makes it feasible to extent the life of the negative electrode. In more detail, active material particles are to greatly change in volume on intercalating and deintercalating lithium and are to be disintegrated into microcrystallites or fine particles in due course of time. It follows that cracks develop, and part of the active material particles lose electrochemical contact among themselves, which causes reduction in charge/discharge cycle characteristics important for a secondary battery. For this reason, fine particles of small size are used to prepare the negative electrode thereby to suppress further size reduction of the particles and to improve the charge/discharge cycle characteristics. Incidentally, if the small-diametered active material particles have an average particle size smaller than the lower limit of the above-specified range, the particles are susceptible to oxidation. Moreover, such small particles are costly to produce. The particle size of the small-diametered active material particles is measured by a laser diffraction scattering method or under electron microscopic (SEM) observation.

Having a large surface area, small-diametered active material particles are more susceptible to oxidation than relatively large-diametered particles (e.g., those having a diameter of several tens of micrometers). Oxidation of active material particles causes deterioration of irreversible capacity and charge/discharge efficiency, both of which are of importance for secondary batteries similarly to the charge/discharge cycle characteristics. That is, the irreversible capacity would increase, and the charge/discharge efficiency would decrease. In some detail, if much oxygen is present in small-diametered active material particles, electrochemically stored lithium ions form firm bonding with oxygen atoms. It would follow that the lithium ions are not released in discharging. Accordingly, small-diametered active material particles need stricter control of oxygen concentration than relatively large-diametered particles. Specifically, the concentration of oxygen present in the small-diametered active material particles is preferably less than 2.5% by weight, still preferably 1.5% by weight or lower, particularly preferably 1% by weight or lower. In contrast, relatively large-diametered particles, whose surface area is not so large, do not require so severe control against oxidation. It is desirable for the small-diametered active material particles to have as low an oxygen concentration as possible. It is the most desirable that no oxygen be present. In the light of the process of producing the small-diametered active material particles, nevertheless, a presently reachable lowest oxygen concentration would be about 0.005% by weight. The oxygen concentration in small-diametered active material particles is measured by gas analysis involving combustion of a sample to be analyzed.

In addition to the preferred oxygen concentration of the whole small-diametered active material particles, it is also preferred that the Si concentration in the outermost surface of the small-diametered active material particles be higher than 1/2, particularly higher than 4/5, especially higher than 10 times, the oxygen concentration in the outermost surface of the particles. The present inventors' investigation has revealed that an increase of irreversible capacity and a decrease of charge/discharge efficiency are affected predominantly by the oxygen concentration of the outer surface of the small-diametered active material particles. This is because the oxygen present in the outer surface easily undergoes reaction with lithium during charging of the secondary battery, which can deteriorate the battery characteristics. Hence, the Si concentration to oxygen concentration ratio in the outer surface of the particles is specified as described above. The surface oxygen concentration of small-diametered active material particles can be measured with various surface analyzers including an electron spectroscope for chemical analysis (ESCA) and an Auger electron spectroscope (AES).

Whichever of the particles (a) to (e) may be used, the small-diametered active material particles are preferably produced under conditions inhibiting incorporation of oxygen, for example, in an inert gas atmosphere.

Whichever of the particles (a) to (e) may be used, the small-diametered active material particles are ground to an average particle size within the above-recited range by a prescribed grinding process, typically exemplified by a dry grinding process and a wet grinding process. In dry grinding, a jet mill is used, for example. In wet grinding, the particles are dispersed in an organic solvent (grinding liquid), such as hexane or acetone, and ground together with a grinding medium, such as alumina beads or zirconia beads.

During the grinding operation, the small-diametered active material particles are often oxidized. It is therefore preferred that the ground small-diametered active material particles, the average particle size $D_{50}$ of which has been reduced to 0.1 to 10 μm, be subjected to etching with an etching solution to remove the oxide on the surface of the particles. By so doing, the oxygen concentration of the whole small-diametered active material particles and the oxygen concentration of the outer surface of the particles can easily be controlled to or below the recited values. Useful etching solutions include aqueous solutions of HF, buffered acids, NH$_4$F, KOH, NaOH, ammonia or hydrazine. The degree of etching can be controlled appropriately by the kind and concentration of the etching solution, the temperature of the etching solution, the etching time, and the like. As a result, the oxygen concentration of the whole small-diametered active material particles and the oxygen concentration of the outer surface of the particles can easily be controlled within the recited ranges. Note that, however, the oxide on the particle surface should not be removed completely in the etching step. This is because particles from which the surface oxide has completely been removed would be oxidized rapidly when they are exposed to the atmosphere. Therefore, the degree of etching is preferably controlled so that an adequate amount of the oxide may remain. Even after being exposed to the atmosphere, those particles having an adequate amount of the oxide remaining on the surface thereof are capable of maintaining almost the same surface and whole oxygen concentrations as adjusted by the etching.

When etching is effected using HF, for example, the small-diametered active material particles are put into an HF solution having a concentration of about 1 to 50% by weight, and the system is stirred at room temperature for about 5 to 30 minutes, whereby the surface oxygen concentration can be reduced to a desired level. When in using KOH or NaOH for etching, the small-diametered active material particles are put into an aqueous solution having a concentration of about 1 to 40% by weight, and the system is stirred at room temperature for about 5 to 120 minutes. In using ammonia, the small-diametered active material particles are put into an aqueous solution having a concentration of about 1 to 20% by weight, and the system is stirred at room temperature for about 5 to 60 minutes to carry out etching. When NH$_4$F is used, the small-diametered active material particles are put into an aqueous solution having a concentration of about 1 to 50% by weight, followed by stirring at room temperature for about 5 to 60 minutes to conduct etching. In using hydrazine, the small-diametered active material particles are put into an aqueous solution having a concentration of about 1 to 50% by weight, followed by stirring at room temperature for about 5 to 60 minutes to compete etching.

The negative electrode containing the above-described small-diametered active material particles is less influenced by cracking and pulverizing of the active material particles due to repetition of charge/discharge cycles. As a result, charge/discharge efficiency increases, and irreversible capacity reduces thereby to improve the charge/discharge cycle characteristics. Further, reduction in oxygen content in the small-diametered active material particles also brings about reduction of irreversible capacity, increase of charge/discharge efficiency, and improvement in charge/discharge cycle characteristics.

The small-diametered active material particles may be coated with a thin metal coat. The thin metal coat inhibits oxidation of the small-diametered active material particles to effectively prevent an increase in irreversible capacity and a decrease in charge/discharge current efficiency. In addition, the electron conductivity is improved, and the charge/discharge cycle characteristics are further improved.

In order to inhibit oxidation of the small-diametered active material particles more effectively and to allow Li and Si to react with each other more efficiently, the thickness of the thin metal coat is preferably 0.005 to 4 μm, still preferably 0.05 to 0.5 μm. The thickness of the thin metal coat is measured with, for example, ESCA or AES.

The metal making up the thin metal coat is preferably selected from those having low capability of forming lithium. Such metals include Ni, Cu, Co, Fe, Ag, and Au. Ni, Co, Ag, and Au are preferred from the standpoint of oxidation prevention. These metals can be used either individually or in the form of an alloy composed of two or more thereof.

In the small-diametered active material particle coated with a thin metal coat, the oxygen concentration in the interfacial part between the thin metal coat and the small-diametered active material particle is such that the Si concentration exceeds 1/2 the oxygen concentration as described with reference to the aforementioned small-diametered active material particles. The "interfacial part" between the thin metal coat and the small-diametered active material particle is considered to be the part where the concentration of the metal making up the thin metal coat becomes the minimum in AES analysis of the metal-coated small-diametered active material particles.

In order to increase the electrical conductivity of the metal-coated small-diametered active material particles, it is preferred that the oxygen concentration of the outer surface of the thin metal coat be as low as possible.

The small-diametered active material particles having a thin metal coat are preferably prepared as follows. Active material particles are ground to powder of prescribed size by dry grinding or wet grinding in accordance with the above-described process for preparing small-diametered active material particles. The oxide present on the surface of the particles is removed by etching. The etched particles are thoroughly rinsed with water and then subjected to electroless plating to form a thin metal film thereon. Prior to electroless plating, the particles may be subjected to a surface sensitizing treatment and a surface activating treatment in a usual manner. The electroless plating conditions are selected appropriately according to the plating metal. For instance, the plating bath composition shown below is useful for Ni plating. In this case, the bath has a temperature of about 40 to 60°C and a pH of about 4 to 6, and the plating time is 0.5 to 50 minutes.

| | |
|---|---|
| $NiSO_4 \cdot 6H_2O$ | 15-35 g/l |
| $NaH_2PO_2 \cdot H_2O$ | 10-30 g/l |
| $Na_3C_6H_5O_7$ | 15-35 g/l |
| $NaC_3H_5O_2$ | 5-15 g/l |

The thin metal coat formed on the small-diametered active material particles does not always need to cover the individual particles completely. For example, the thin metal coat covering the whole particle uniformly may have a large number of microvoids extending through the thickness thereof. Such microvoids allow an electrolyte to pass through and reach the inside of the small-diametered active material particle, so that the electrochemical reactivity essentially possessed by the silicon-containing particle may surely be manifested. The thin metal coat may also be provided in the form of islands on the particle surface.

A preferred process for producing the negative electrode of the first embodiment will be described by referring to Figs. 4(a) through 4(d). A carrier foil 11 is prepared as shown in Fig. 4(a). The carrier foil 11 is not particularly limited in material. It is preferred that the carrier foil 11 be electro-conductive. The carrier foil 11 does not need to be made of metal as long as it is electro-conductive. Nevertheless, use of a metal-made foil as the carrier foil 11 is advantageous in that the carrier foil 11 separated after making a negative electrode 10 can be melted and recycled into foil. Taking recyclability into consideration, the carrier foil 11 is preferably of the same material as a surface layer 4 formed by electroplating as hereinafter described. Seeing that the carrier foil 11 is used as a support for making a negative electrode 10 of the present embodiment, it is desirable for the carrier foil 11 to have sufficient strength not to bunch up in the production of the negative electrode. Accordingly, the carrier foil 11 preferably has a thickness of about 10 to 50 $\mu$m.

The carrier foil 11 can be prepared by, for example, electrolysis or rolling. Rolling provides a carrier foil with small surface roughness. Use of a carrier foil with small surface roughness is advantageous in that a release layer 11 a hereinafter described is unnecessary. Where the carrier foil 11 is prepared by electrolysis, the electrolysis step can be incorporated into the same line for producing a negative electrode 10, which is advantageous from the standpoint of stable production of the negative electrode 10 and reduction of production cost. In preparing the carrier foil 11 by electrolysis, electrolysis is carried out using a rotating drum as a positive electrode in an electrolyte containing metal (e.g., copper or nickel) ions to deposit the metal on the peripheral surface of the drum. The deposited metal is peeled from the drum to obtain the carrier foil 11.

When the carrier foil 11 has small surface roughness, an active material layer 3 can be formed directly on the carrier foil 11. It is also possible to form a release layer 11a on one side of the carrier foil 11 as shown in Fig. 4(a), on which layer to form the active material layer 3. The release layer 11a not only facilitates peeling but adds anticorrosive protection to the carrier foil 11. Whether or not the release layer 11a is to be formed, the surface roughness Ra of the carrier foil 11 is preferably 0.01 to 3 $\mu$m, still preferably 0.01 to 1 $\mu$m, particularly preferably 0.01 to 0.2 $\mu$m. The carrier foil 11 having that degree of surface roughness, the metal deposit would be successfully separated, and, where the release layer 11a is provided thereon, the resulting release layer 11a would be free from thickness variation. Where the release layer 11a is provided, there would be no problem in some cases if the surface roughness Ra of the carrier foil 11a exceeds the above-specified range because the surface roughness of the carrier foil 11 will be absorbed by the release layer 11a.

The release layer 11a is formed by, for example, plating with chromium, nickel or lead or treating with a chromate. The release layer 11 a can also be formed of the nitrogen-containing compound or sulfur-containing compound disclosed in JP-A-11-317574, pars. [0037]-[0038] or the mixture of a nitrogen-containing compound or sulfur-containing compound and fine copper particles disclosed in JP-A-2001-140090, pars. [0020]-[0023]. It is preferred to form the release layer 11a by plating with chromium, nickel or lead or by chromate treatment in view of satisfactory releasability. The reason for this preference is that these treatments provide a layer of an oxide or a salt of an acid on the surface of the release layer 11a, which layer functions to reduce the adhesion between the carrier foil 11 and an electroplating layer hereinafter described thereby to improve the releasability. For successful peeling, the release layer 11a preferably has a thickness of 0.05 to 3 $\mu$m. After the release layer 11a is formed, the surface roughness Ra of the formed release layer 11a is preferably 0.01 to 3 m, still preferably 0.01 to 1 $\mu$m, particularly preferably 0.01 to 0.2 $\mu$m, as in the case where the active material layer 3 is directly formed on the carrier foil 11.

An electrolytically prepared carrier foil 11 has a smooth glossy surface on one side and a matte surface with unevenness on the other side in nature of the process. In other words, the opposite sides differ in surface roughness. The glossy side is the one that has been in contact with the drum surface in electrolysis, and the matte side is the deposit side. In forming the release layer 11a on the carrier foil 11 in accordance with the subject process, it may be provided on either of the glossy surface and the matte surface. Taking releasability into consideration, the release layer 11a is preferably formed on the glossy surface with smaller surface roughness. Where the release layer 11a is to be formed on the matte surface, it is recommended to use an electrolytic foil prepared by using an electrolyte containing the additive disclosed in JP-A-9-143785 or to etch the matte surface prior to formation of the release layer 11a. The surface roughness of the matte surface may also be reduced by rolling.

An electro-conductive slurry containing active material particles is applied to the release layer 11a as shown in Fig. 4(b) to form an active material layer 3. Where the release layer 11a is not provided, the active material layer 3 is formed directly on the carrier foil 11. The slurry contains active material particles, particles of an electro-conductive carbonaceous material or an electro-conductive metallic material, a binder, a diluting solvent, and so forth. Useful binders include polyvinylidene fluoride (PVDF), polyethylene (PE), and ethylene-propylene-diene monomer (EPDM). Useful diluting solvents include N-methylpyrrolidone and cyclohexane. The amount of the active material particles in the slurry is preferably about 14 to 40% by weight. The amount of the electro-conductive carbonaceous material or electro-conductive metallic material is preferably about 0.4 to 4% by weight. The amount of the binder is preferably about 0.4 to 4% by weight. The amount of the diluting solvent is preferably about 60 to 85% by weight.

After the coating layer of the slurry dries to form an active material layer 3, the carrier foil 11 having the active material layer 3 formed thereon is immersed in a plating bath containing a metallic material having low capability of forming a lithium compound to carry out electroplating. Because of this immersion, the plating bath penetrates the active material layer 3 and reaches the interface between the active material layer 3 and the release layer 11a. Electroplating is performed in that state. As a result, the metallic material having low capability of forming a lithium compound is deposited in (a) the inside of the active material layer 3, (b) the outer surface side of the active material layer 3 (i.e., the side in contact with the plating bath, and (c) the inner surface side of the active material layer 3 (i.e., the side facing the release layer 11a). Thus, a pair of surface layers 4 are formed, and the material constituting the surface layers 4 is distributed throughout the thickness of the active material layer 3 to give a negative electrode 10 having the structure shown in Fig. 1 (see Fig. 4(c)).

The following is recommended electroplating conditions taking copper, for instance, as a metallic material having low capability of forming a lithium compound. In using a copper sulfate-based solution, electroplating is performed at a copper concentration of 30 to 100 g/l, a sulfuric acid concentration of 50 to 200 g/l, a chlorine concentration of 30 ppm, a bath temperature of 30 to 80°C, and a current density of 1 to 100 A/dm$^2$. In using a copper pyrophosphate-based solution, electroplating is conducted at a copper concentration of 2 to 50 g/l, a potassium pyrophosphate concentration of 100 to 700 g/l, a bath temperature of 30 to 60°C, a pH of 8 to 12, and a current density of 1 to 10 A/dm$^2$. As long as these electrolysis conditions are adjusted properly, the material making up the surface layers 4 penetrates the whole thickness of the active material layer 3 to provide an electrical connection between the two surface layers 4. At the same time, the aforementioned numerous microvoids 5 are formed easily in the surface layers 4.

Not involving outer force application, the method of creating the microvoids 5 in the surface layers 4 by electroplating is advantageous in that the surface layers 4 are not damaged, which means that the negative electrode 10 is not damaged, as compared with a method by pressing (hereinafter described). The present inventors assume that the mechanism of formation of microvoids 5 in the formation of the surface layers 4 is as follows. Containing the active material particles 2, the active material layer 3 has a microscopically textured surface, that is, a mixed profile having active sites where the metal grows easily and sites where the metal does not grow easily. When the active material layer having such a surface condition is electroplated, growth of the deposited metal differs from site to site, and the particles of the material making up the surface layers 4 grow into a polycrystalline structure. On further growth of crystals, adjacent crystals meet, resulting in formation of voids in the meeting site. It is believed that the thus formed voids connect to each other to form the microvoids 5. According to this mechanism, there are formed microvoids 5 having an extremely fine structure.

Microvoids 5 can also be formed in the surface layers 4 by pressing the formed electrode 10. In order to obtain sufficient electron conductivity, the densification by pressing is preferably such that the total thickness of the active material layer 3 and the surface layers 4 after pressing may be 90% or less, particularly 80% or less, of that before pressing. Pressing can be carried out with, for example, a roll press. It is preferred that the pressed active material layer 3 have 5 to 30% by volume of the voids 6 as stated supra. When the active material intercalates lithium and expands volumetrically during charging, the voids 6 serve to relax the stress attributed to the volumetric expansion. Such voids 6 can be obtained by controlling the pressing conditions as described. The void volume of the voids 6 can be determined by electron microscopic mapping as described.

In the subject process of production, it is possible to press the active material layer 3 before the electroplating. For the sake of distinguishing from the above-mentioned pressing of the negative electrode, the pressing before the electroplating will be called prepressing. Prepressing is effective in preventing separation between the active material layer 3 and the surface layers 4 and preventing the active material particles 2 from being exposed on the surface of the electrode 10. As a result, deterioration of battery cycle life due to fall-off of the active material particles 2 can be averted. Besides, prepressing is effective in controlling the degree of penetration of the material constituting the surface layers 4 into the active material 3 (see Example given later). Specifically, a high degree of pressing results in reduction of the distance between active material particles 2, which makes the active material 3 less permeable to the material constituting the surface layers 4. Conversely, when the degree of pressing is small, the distance between the active material particles 2 remains long and ready to allow the material making up the surface layers 4 to penetrate into the active material 3. The prepressing conditions are preferably such that the thickness of the active material layer 3 after prepressing is 95% or less, particularly 90% or less, of that before prepressing.

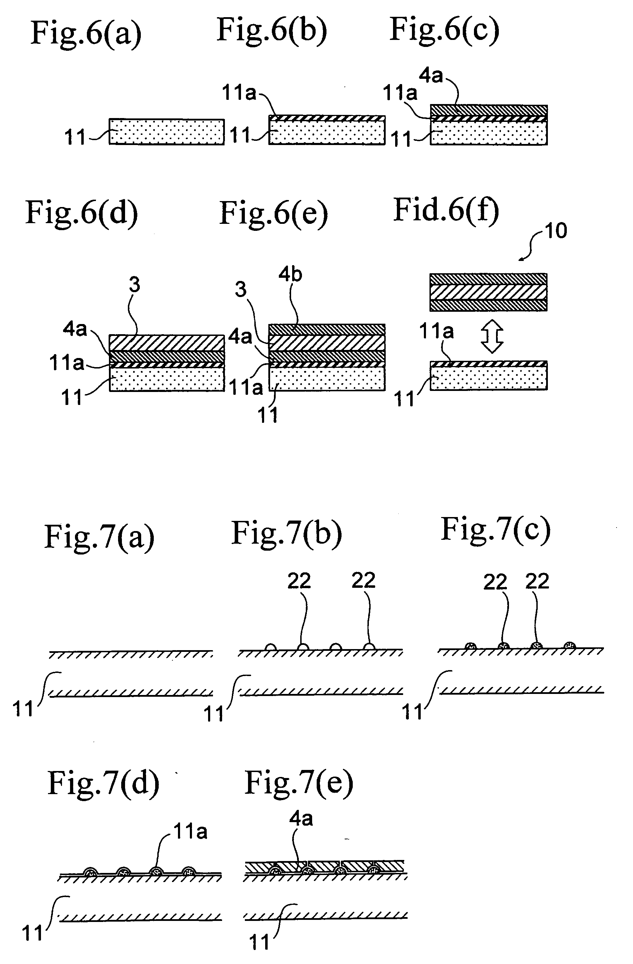

Finally, the electrode 10 is separated from the carrier foil 11 at the release layer 11a as shown in Fig. 4(d). While Fig. 4(d) shows that the release layer 11a is left on the side of the carrier foil 11, the release layer 11a is, in fact, left sometimes on the side of the carrier foil 11, sometimes on the side of the electrode 10, and sometimes on both. In any case, the presence of the release layer 11a, being extremely thin, gives no adverse influences on the negative electrode performance. Figs. 5(a) and 5(b) each show the structure of a negative electrode produced by the subject process. The negative electrodes of Figs. 5(a) and 5(b) are different in particle size of the active material used. The particle size of the active material in Fig. 5(b) is smaller than that in Fig. 5(a).

According to the subject process of production, the negative electrode 10 of which the both sides can work for electrode reaction can be obtained by forming the active material layer 3 through a single operation. Conventional negative electrodes of which the both sides serve for electrode reaction cannot be produced without forming an active material layer on both sides of a current collecting thick conductor layer. That is, it has been necessary to conduct the operation for forming an active material layer twice. Therefore, the subject process of production brings about marked improvement on negative electrode production efficiency.

According to the subject process of production, the negative electrode 10 can be held on the carrier foil 11 until it is assembled into a battery. It is peeled from the carrier foil 11 immediately before assembly. This means that the negative electrode 10 which is thin and wrinkles easily can be handled easily in transfer.

A second preferred process of producing a negative electrode will be described by referring to Figs. 6(a) through 6(f). With respect to the particulars of this process which are not described hereunder, the description regarding the first process applies appropriately. The difference of the second process from the first one is as follows. In the second process, a metallic material having low capability of forming a lithium compound is deposited on the carrier foil 11 by electroplating to form a current collecting surface layer 4a (one of the pair) before the active material layer 3 is formed on the carrier foil 11. The active material layer 3 is formed on the current collecting surface layer 4a, and a metallic material having low capability of forming a lithium compound is deposited on the active material layer 3 by electroplating to form a current collecting surface layer 4b (the other of the pair).

A carrier foil 11 is prepared as shown in Fig. 6(a). A thin release layer 11a is formed on a side of the carrier foil 11 as shown in Fig. 6(b). In the second process, the release layer 11a may be formed on either of the glossy surface and the matte surface.

The release layer 11a thus formed is electroplated with a metallic material having low capability of a lithium compound to form a surface layer 4a, one of the pair of surface layers, as shown in Fig. 6(c). The electroplating can be carried out under the same conditions as in the electroplating of the first process. By this electroplating, the aforementioned microvoids can easily be generated in the surface layer 4a. Subsequently, an electro-conductive slurry containing active material particles is applied to the surface layer 4a to form an active material layer 3 as shown in Fig. 6(d). The surface of the surface layer 4a on which the conductive slurry is applied is a deposited side, namely, a matte surface with increased roughness. The conductive slurry being applied to the surface layer 4a having such a surface condition, the active material particles and the surface layer 4a exhibits improved adhesion.

After the coating layer of the slurry dries to form the active material layer 3, the active material layer 3 is electroplated with a metallic material having low capability of forming a lithium compound to form a current collecting surface layer 4b, the other of the pair. The electroplating can be carried out under the same conditions as in the electroplating of the first process. By properly adjusting the electrolysis conditions, the surface layer 4b is formed while allowing the material making up the surface layer 4b to penetrate throughout the thickness of the active material layer 4, thereby providing an electrical connection between the surface layers 4a and 4b. In addition, a great number of the above-described microvoids are easily provided in the surface layer 4b. After the formation of the surface layer 4b, the surface layers 4a and 4b and the active material layer 3 may be pressed all together to form microvoids 5 in the surface layers 4a and 4b. The active material layer 3 may be subjected to prepressing before the surface layer 4b is formed on the active material layer 3.

Finally, the carrier foil 1 is peeled apart from the surface layer 4a to give a negative electrode 10.

Because the flow chart of Figs. 6(a) to 6(f) is schematic, each of the surface layers 4a and 4b and the active material layer 3 are depicted as clearly bordered layers, and the negative electrode 10 as a three-layered structure. It should be noted, however, that the constituent material of each surface layer 4a or 4b actually penetrates the active material layer 3 thereby to connect the surface layers 4a and 4b.

Figs. 7(a) to 7(e) shows a third process of production as a modification of the second process. In the third process, a coat made of a material different from the material making the current collecting surface layer 4a is provided on the carrier foil 11 to a thickness of 0.001 to 1 $\mu$m prior to the formation of the current collecting surface layer 4a shown in Fig. 6(c) according to the second process. The material making the current collecting surface layer 4a is then deposited thereon by electroplating to form the current collecting surface layer 4a.

14

A carrier foil 11 is prepared as shown in Fig. 7(a). A coat 22 is formed on a side of the carrier 11 by a prescribed method as shown in Fig. 7(b). Before formation of the coat, it is preferred that the surface of the carrier foil 11 be cleaned by pretreating such as acid cleaning. The coat 22 is used to make the carrier foil surface, on which the surface layer 4a is to be formed, non-uniform in electron conductivity thereby to form a large number of microvoids in the surface layer 4a. The coat 22 is preferably applied to a thickness of 0.001 to 1 $\mu$m, still preferably 0.002 to 0.5 $\mu$m, particularly preferably 0.005 to 0.2 $\mu$m. Applied to a thickness in that range, the coat 22 covers the surface of the carrier foil 11 discontinuously, for example in the form of islands. Discontinuous formation of the coat 22 is advantageous for forming the microvoids 5 more easily. In Fig. 7(b), the size of the coat 22 is exaggerated for the sake of better understanding.

The coat 22 is made of a material different from the material making the surface layer 4a, whereby the surface layer 4a can successfully be peeled from the carrier foil 11 in the step of peeling hereinafter described. The coat 22 is preferably made of a material which differs from the material making the surface layer 4a and contains at least one element of Cu, Ni, Co, Mn, Fe, Cr, Sn, Zn, In, Ag, Au, C, Al, Si, Ti, and Pd.

The process of forming the coat 22 is not particularly restricted. For example, the process of forming the coat 22 is selected in relation to the process of forming the surface layer 4a. More specifically, where the surface layer 4a is formed by electroplating, it is preferred to form the coat 22 also by electroplating from the standpoint of production efficiency and the like. The coat 22 can also be formed by other processes, such as electroless plating, sputtering, physical vapor deposition (PVD), chemical vapor deposition (CVD), a sol-gel process, and ion plating.

Where the coat 22 is formed by electroplating, a proper plating bath and proper plating conditions are selected according to the constituent material of the coat 22. For example, in making the coat 22 of tin, a plating bath having the composition shown below or a tin borofluoride bath can be used. In using these plating baths, the bath temperature is preferably about 15 to 30°C, and the current density is preferably about 0.5 to 10 A/dm$^2$.

Plating bath composition:

| | |
|---|---|
| $SnSO_4$ | 30 to 70 g/l |
| $H_2SO_4$ | 60 to 150 g/l |
| Cresolsulfonic acid | 70 to 100 g/l |

As described above, the coat 22 is used to provide the surface of the carrier foil 11, on which the surface layer 4a is to be formed, with non-uniform electron conductivity. When the material making the coat 22 is largely different from the carrier foil 11 in electron conductivity, application of the coat 22 immediately gives non-uniformity of electron conductivity to the surface for forming the surface layer 4a thereon. Use of carbon as a material of the coat 22 is an example of that case. On the other hand, when in using, as a material making the coat 22, a material whose electron conductivity is about the same as that of the carrier foil 11, such as various metallic materials, e.g., tin, application of the coat 22 does not immediately result in non-uniform electron conductivity of the surface for forming the surface layer 4a. Then, in case where the coat 22 is made of such a material, it is preferred that the carrier foil 11 having the coat 22 formed thereon be exposed to an oxygen-containing atmosphere, such as the air, in a dry condition, thereby to oxidize the surface of the coat 22 (and the exposed area of the carrier foil 11) (see Fig. 7(c)). By this operation, the electron conductivity on the surface for forming the surface layer 4a becomes non-uniform. When electroplating (described infra) is performed on the surface with the thus created non-uniformity of electron conductivity, there is produced a difference in electrodeposition rate between the surface of the coat 22 and the exposed area of the carrier foil 11. It follows that the microvoids 5 can easily be formed in the surface layer 4a. The degree of oxidation is not critical in the present invention. According to the present inventors' study, it has been confirmed that allowing the carrier foil 11 having the coat 22 formed thereon in the atmosphere for about 10 to 30 minutes, for example, is sufficient. Of course, it can also be possible to forcibly oxidize the carrier foil 11 having the coat 22 formed thereon.

The reason why the exposure of the carrier foil 11 having the coat 22 formed thereon to an oxygen-containing atmosphere is under a dry condition is for the sake of oxidation efficiency. Where the coat 22 is formed by electroplating, for example, such an operation is effected by drying the carrier foil 11 taken out of the plating bath by means of a dryer, etc. and allowing it to stand in the atmosphere for a given time. Where the coat 22 is formed by dry processes, such as sputtering and various vacuum deposition techniques, the drying operation is unnecessary, and the foil 11 having the coat 22 formed thereon is allowed to stand in the atmosphere as it is.

Oxidation of the coat 22 is followed by forming the release layer 11 a thereon as shown in Fig. 7(d). The release layer 11a is provided for the purpose of successfully separating the surface layer 4a from the carrier foil 11 in the step of peeling. Accordingly, it is possible to form the surface layer 4a having microvoids without forming the release layer 11a.

A material for making the surface layer 4a is then deposited on the release layer 11a by electroplating to form the surface layer 4a as shown in Fig. 7(e). The resulting metal foil 4 contains a great number of microvoids. While Fig. 7(e) shows that the microvoids are formed at positions on the top of the coat 22, the aim of this depiction is only for the sake of convenience. In fact, the microvoids are not always formed at positions on the top of the coat 22. The plating bath and plating conditions are chosen appropriately according to the material of the surface layer 4a. In making the surface layer 4a of Ni, for instance, a Watts bath having the composition shown below or a sulfamic acid bath can be used as a plating bath. In using these baths, the bath temperature is preferably about 40 to 70°C, and the current density is preferably about 0.5 to 20 A/dm$^2$.

| | |
|---|---|
| $NiSO_4 \cdot 6H_2O$ | 150 to 300 g/l |
| $NiCl_2 \cdot 6H_2O$ | 30 to 60 g/l |
| $H_3BO_3$ | 30 to 40 g/l |

In the third process, formation of the surface layer 4a can also be achieved by an alternative process (1) or an alternative process (2) hereinafter described. In the alternative process (1), a coating, e.g., paste, containing carbonaceous material particles is prepared. Useful carbonaceous material include acetylene black. In order to form microvoids easily, it is preferred for the carbonaceous material to have an average particle size $D_{50}$ (determined by a laser diffraction scattering method combined with scanning electron microscopic observation) of about 2 to 200 nm, particularly about 10 to 100 nm. The coating is applied to a prepared carrier foil 11. The coating thickness is preferably about 0.001 to 1 $\mu$m, particularly preferably about 0.05 to 0.5 $\mu$m. A material of the surface layer 4a is then deposited on the coating layer by electroplating to form the surface layer 4a. The conditions of the electroplating can be the same as those in the third process.

In the alternative process (2), a plating bath containing the material of the surface layer 4a is prepared. In making the surface layer 4a of Ni, for instance, the aforementioned Watts bath or sulfamic acid bath will do. Particles of a carbonaceous material are added and suspended in the plating bath. The carbonaceous material to be used and the particle size of the carbonaceous material can be the same as those in the alternative process (1). For easy formation of microvoids, the amount of the carbonaceous material to be suspended in the plating bath is preferably about 0.5 to 50 g/l, still preferably about 1 to 10 g/l. Electroplating of the carrier foil 11 is carried out while stirring the plating bath to keep the carbonaceous material in the suspended state to electrodeposit the material for the surface layer 4a to obtain the surface layer 4a.

After the surface layer 4a is formed by any of the above-described processes, the same steps as in the second process are conducted to obtain the negative electrode 10.

In the first to third processes of production, a coating containing a carbonaceous material having an average particle size $D_{50}$ of 2 to 200 nm may be applied to the formed active material layer 3 to a thickness of 0.001 to 1 $\mu$m prior to the electroplating in accordance with the alternative process (1). The material making the surface layer 4b is then deposited by electroplating to form the surface layer 4b. By so doing, formation of a large number of microvoids in the surface layer 4b can be achieved more easily.

The negative electrode according to the first embodiment can also be produced by the following forth process. A carrier resin having a large number of cation exchange groups on the surface thereof is treated with a metal ion-containing solution to form a metal salt of the cation exchange groups. The carrier resin with cation exchange groups includes, for example, the one prepared by treating the surface of a polyimide resin with an aqueous solution of an alkali, e.g., sodium hydroxide or potassium hydroxide, to open the imide rings and produce a large number of carboxyl groups. A suitable concentration of the aqueous alkali solution is about 3 to 10 mol/l. The temperature of the aqueous alkali solution is about 20 to 70°C, and the treating time is about 3 to 10 minutes. The polyimide resin treated with the aqueous alkali solution is preferably neutralized with an acid. For the details of the ring opening of a polyimide resin by alkali treatment and subsequent formation of a metal coating film, reference can be made in JP-A-2001-73159.

The metal salt thus formed is reduced with a reducing agent. The reducing agent includes sodium borohydride and hypophosphorous acid or a salt thereof. The reduction results in forming a coating film of the metal, which will serve as a catalyst nucleus, on the surface of the carrier resin. The coating film is electroplated to form one of the current collecting surface layers. Subsequently, an electro-conductive slurry containing active material particles is applied to the surface layer to form an active material layer. The active material layer is electroplated to form the other surface layer. Finally, the carrier resin is removed from the first formed surface layer by peeling or dissolving with an organic solvent to give the negative electrode of the subject embodiment. The description about the first to third processes applies appropriately to those particulars of the fourth process that are not described here.

The thus obtained negative electrode 10 according to the first embodiment is assembled into a nonaqueous secondary battery together with known positive electrode, separator and nonaqueous electrolyte. A positive electrode is produced as follows. A positive electrode active material and, if necessary, a conductive material and a binder are suspended in an appropriate solvent to prepare a positive electrode active material mixture, which is applied to a current collector, dried, rolled, and pressed, followed by cutting and punching. The positive electrode active material includes conventionally known ones, such as lithium-nickel composite oxide, lithium-manganese composite oxide, and lithium-cobalt composite oxide. Preferred separators include nonwoven fabric of synthetic resins and a porous film of polyethylene or polypropylene. The nonaqueous electrolyte used in a lithium secondary battery, for instance, is a solution of a lithium salt, a supporting electrolyte, in an organic solvent. The lithium salt includes $LiClO_4$, $LiAlCl_4$, $LiPF_6$, $LiAsF_6$, $LiSbF_6$, LiSCN, LiCl, LiBr, LiI, $LiCF_3SO_3$, and $LiC_4F_9SO_3$.

The negative electrode according to the second embodiment of the present invention will then be described by referring to Fig. 8. The second embodiment will be described only with reference to the differences from the first embodiment. The detailed description of the first embodiment applies appropriately to those particulars of the second one which are not referred to here. The members in Fig. 8 which are the same as in Fig. 1 are given the same reference numerals as used in Fig. 1.

As shown in Fig. 8, the negative electrode of the second embodiment has an electro-conductive metal foil layer 8 as a core in the middle of its thickness. An active material layer 3 is formed on each side of the metal foil layer 8, and the active material layers 3 are covered with the respective current collecting surface layers 4a and 4b.

The material making up the current collecting surface layer 4a or 4b penetrates throughout the thickness of the respective active material layer 3. The active material particles 2 are not exposed on the surface of the electrode and embedded inside the respective surface layers 4a and 4b. The materials making up the surface layers 4a and 4b penetrate the whole thickness of the respective active material layers 3 and reach the metal foil layer 8. As a result, the surface layers 4a and 4b electrically connect to the metal foil layer 8 to increase the electron conductivity of the negative electrode as a whole. Similarly to the negative electrode of the first embodiment, the negative electrode of the second embodiment performs a current collecting function as a whole.

The surface layers 4a and 4b and active material layers 3 in the second embodiment can be designed to have the same thicknesses as in the first one. For securing increased energy density by minimizing the total thickness of the negative electrode, the thickness of the metal foil layer 8 is preferably 5 to 40 $\mu$m, still preferably 10 to 20 $\mu$m. From the same viewpoint, the total thickness of the negative electrode is preferably 10 to 100 $\mu$m, still preferably 20 to 60 $\mu$m.

A process for producing the negative electrode according to the subject embodiment is briefly described below. An electro-conductive slurry containing active material particles is applied to both sides of a metal foil layer 8 to form active material layers. The metal foil layer 8 may be previously produced or be produced in an in-line step of the production of the negative electrode. Where the metal foil layer 8 is in-line produced, it is preferably produced by electrolytic deposition. After the applied slurry dries to form active material layers, the metal foil layer 8 having the active material layers thereon is immersed in a plating bath containing a metallic material having low capability of forming a lithium compound and electroplated in this state with the electro-conductive material to form the surface layers 4a and 4b. By this process a large number of microvoids can easily be formed in the surface layers 4a and 4b, and the conductive material making the surface layers 4a and 4b penetrates the whole thickness of the active material layers to provide an electrical connection between both the surface layers and the metal foil layer 8.

The present invention is not limited to the aforementioned embodiments. For example, while in the aforementioned embodiments the material making up the current collecting surface layers 4 penetrate the thickness of the active material layer 3 to create an electrical connection between the two surface layers 4, the two surface layers 4 may not be connected electrically as long as the current collecting capabilities of each surface layer 4 can be secured sufficiently.

The present invention will now be illustrated in greater detail with reference to Examples, but it should be understood that the invention is not construed as being limited thereto. Unless otherwise noted, all the percents are by weight.

EXAMPLE 1-1

(1) Preparation of active material particles

A molten metal at 1400°C containing 80% of silicon and 20% of nickel was cast into a copper-made mold and quenched to obtain an ingot of a silicon-nickel alloy. The ingot was ground in a jet mill and sieved to obtain active material particles. The particles had an average particle size ($D_{50}$) of 5 $\mu$m.

(2) Preparation of slurry

A slurry having the following composition was prepared.

| | |
|---|---|
| Active material particles obtained in (1) above | 16% |
| Acetylene black (particle size: 0.1 $\mu$m) | 2% |
| Binder (polyvinylidene fluoride) | 2% |
| Diluting solvent (N-methylpyrrolidone) | 80% |

(3) Formation of release layer

A surface of an electrolytically prepared copper carrier foil (thickness: 35 $\mu$m; surface roughness Ra: 0.1 $\mu$m) was treated with a chromate to form a 0.5 $\mu$m thick release layer (see Fig. 4(a)). The release layer also had a surface roughness Ra of 0.1 $\mu$m.

(4) Formation of active material layer

The above prepared slurry was applied to the release layer on the carrier foil and dried to form an active material layer (see Fig. 4(b)). The active material layer was densified by pressing with a roll under a pressure of 0.5 t/cm (prepressing step). The resulting active material layer had a thickness of 8 $\mu$m.

(5) Formation of current collecting surface layers

The carrier foil having the active material layer formed thereon was immersed in a plating bath having the following composition to carry out electroplating.

| | |
|---|---|
| Copper | 50 g/l |
| Sulfuric acid | 60 g/l |
| Bath temperature | 40°C |

Electroplating was continued for 70 seconds at a current density of 20 A/dm$^2$, and the carrier foil was taken out of the plating bath to form a negative electrode (see Fig. 4(c)). The thickness of the current collecting surface layer in contact with the carrier foil (hereinafter referred to as a first surface layer) was 1 $\mu$m. The thickness of the current collecting surface layer that was not in contact with the carrier foil (hereinafter referred to as a second surface layer) was 1 $\mu$m.

(6) Separation of copper carrier foil

As shown in Fig. 4(d), the negative electrode was separated from the carrier foil at the release layer to obtain a negative electrode having the structure shown in Fig. 1. Each of the surface layers was found to have a great number of microvoids which opened on the surface of the surface layer and led to the active material layer. The average opening area and the open area ratio of the microvoids were as shown in Table 1-1.

EXAMPLE 1-2

A negative electrode was obtained in the same manner as in Example 1-1, except for changing the electroplating time to 60 seconds. The first surface layer and the second surface layer had a thickness of 1 $\mu$m and 0.5 $\mu$m, respectively. Each of the surface layers was found to have a great number of microvoids which opened on the surface of the surface layer and led to the active material layer. The average opening area and the open area ratio of the microvoids were as shown in Table 1-1.

EXAMPLE 1-3

A negative electrode was obtained in the same manner as in Example 1-1, except for changing the electroplating time to 130 seconds. The first surface layer and the second surface layer had a thickness of 1 $\mu$m and 5 $\mu$m, respectively. Each of the surface layers was found to have a great number of microvoids which opened on the surface of the surface layer and led to the active material layer. The average opening area and the open area ratio of the microvoids were as shown in Table 1-1.

EXAMPLE 1-4

A negative electrode was obtained in the same manner as in Example 1-1, except for conducting the roll pressing after slurry application (prepressing) under a pressure of 1 t/cm and changing the electroplating time to 50 seconds. The first surface layer and the second surface layer had a thickness of 0.5 $\mu$m and 0.5 $\mu$m, respectively. Each of the surface layers was found to have a great number of microvoids which opened on the surface of the surface layer and led to the active material layer. The average opening area and the open area ratio of the microvoids were as shown in Table 1-1.

EXAMPLE 1-5

A negative electrode was obtained in the same manner as in Example 1-1, except for conducting the roll pressing after slurry application (prepressing) under a pressure of 1 t/cm and changing the electroplating time to 120 seconds. The first surface layer and the second surface layer had a thickness of 0.5 $\mu$m and 5 $\mu$m, respectively. Each of the surface layers was found to have a great number of microvoids which opened on the surface of the surface layer and led to the active material layer. The average opening area and the open area ratio of the microvoids were as shown in Table 1-1.

COMPARATIVE EXAMPLE 1-1

(1) Preparation of slurry
A slurry having the following composition was prepared.

| | |
|---|---|
| Graphite particles (particle size: 10 $\mu$m) | 16% |
| Acetylene black (particle size: 0.1 $\mu$m) | 2% |
| Binder (polyvinylidene fluoride) | 2% |
| Diluting solvent (N-methylpyrrolidone) | 80% |

(2) The resulting slurry was applied to both sides of a 30 $\mu$m thick copper foil and dried to form active material layers. The active material layers were roll pressed under a pressure of 0.5 t/cm to obtain a negative electrode. The pressed active material layers each had a thickness of 20 $\mu$m.

Performance evaluation:

Nonaqueous secondary batteries were produced as follows by using each of the negative electrodes prepared in Examples and Comparative Example. The resulting batteries were evaluated by measuring the irreversible capacity, the number of cycles required for obtaining the maximum capacity (hereafter referred to as a cycle number for maximum capacity), the capacity density per weight at the cycle for maximum capacity (hereinafter referred to as a maximum capacity density per weight), the capacity density per volume at the cycle for maximum capacity (hereinafter referred to as a maximum capacity density per volume), and the capacity retention at the 50th cycle. The results of measurements are shown in Table 1-1.

Assembly of nonaqueous secondary battery:

A metallic lithium as a counter electrode and the negative electrode obtained above as a working electrode were placed to face each other with a separator between them and assembled into a nonaqueous secondary battery in a usual manner by using an LiPF$_6$ solution in a mixture of ethylene carbonate and diethyl carbonate (1:1 by volume) as a nonaqueous electrolyte.

Irreversible capacity:

An irreversible capacity, represented by equation shown below, indicates the part of the charge capacity that is not discharged and remains in the active material.

$$\text{Irreversible capacity (\%)} = (1 - \text{first discharge capacity/first charge capacity}) \times 100$$

Cycle number for maximum capacity:

The number of the cycles after the start of charge/discharge, at which a maximum discharge capacity is reached. The lower the initial stage activity of a battery, the greater the cycle number for maximum capacity.

Maximum capacity density per weight:

The discharge capacity per negative electrode weight at the cycle for the maximum capacity. The unit is mAh/g. While discharge capacity is generally expressed per weight of the active material, the discharge capacity per weight of the negative electrode was adopted so as to clarify the advantage of not using a thick current collector.

Maximum capacity density per volume:

The discharge capacity per volume of the negative electrode at the cycle for the maximum capacity. The unit is mAh/cm$^3$. While discharge capacity is generally expressed per volume of the active material or the active material layer, the discharge capacity per volume of the negative electrode was adopted so as to clarify the advantage of not using a thick current collector.

Capacity retention at the 50th cycle:

Capacity retention (50th cycle) (%) = discharge capacity (50th cycle)/maximum discharge capacity x 100

TABLE 1-1

| | | Active Material | Thickness (μm) | | | Average Opening Area ($\mu m^2$) | | Open Area Ratio (%) | | Irreversible Capacity (%) | Cycle Number for Max. Capacity | Max. Capacity Density per Weight (mAh/g) | Max. Capacity Density per Volume ($mAh/cm^3$) | Capacity Retention (50th Cycle) |
|---|---|---|---|---|---|---|---|---|---|---|---|---|---|---|
| | | | 1st Surface Layer | 2nd Surface Layer | Whole Negative Electrode | 1st Surface Layer | 2nd Surface Layer | 1st Surface Layer | 2nd Surface Layer | | | | | |
| ımple | 1-1 | Si8O+ Ni2O | 1 | 1 | 10 | 5 | 4 | 5.6 | 5.8 | 8 | 2 | 330 | 2300 | 98 |
| | 1-2 | Si8O+ Ni2O | 1 | 0.5 | 10 | 4 | 16 | 5.3 | 15 | 8 | 1 | 370 | 2500 | 98 |
| | 1-3 | Si8O+ Ni2O | 1 | 5 | 14 | 5 | 0.7 | 4.9 | 0.77 | 8 | 2 | 220 | 1600 | 99 |
| | 1-4 | Si8O+ Ni2O | 0.5 | 0.5 | 9 | 13 | 15 | 14 | 16 | 7 | 1 | 380 | 2600 | 98 |
| | 1-5 | Si8O+ Ni2O | 0.5 | 5 | 13 | 14 | 0.7 | 13 | 0.73 | 8 | 1 | 230 | 1700 | 99 |
| mp. Example 1-1 | | graphite | - | - | 70 | - | - | - | - | 10 | 1 | 120 | 460 | 100 |

As is apparent from the results shown in Table 1-1, the negative electrodes of Examples each have a small irreversible capacity. It is also seen that the negative electrodes of Examples reach the maximum capacity at a small number of cycles, indicating high charge/discharge capacities from the initial charge/discharge stage. The negative electrodes of Examples are also found to have extremely high capacity densities per weight and volume. They are also proved to have a high capacity retention after repetition of charge/discharge cycles, which indicates their long cycle life. While not shown in the Table, in the negative electrodes of Examples, it was found that the material making up each surface layer had penetrated through the whole thickness of the active material layer to electrically connect the two surface layers and that the active material particles were not substantially exposed on the surface of the negative electrode, being embedded inside the surface layers.

EXAMPLES 2-1 AND 2-2

(1) Formation of release layer

A 35 $\mu$m thick electrolytic copper foil was used as a carrier foil. The carrier foil was cleaned with an acid cleaning solution at room temperature for 30 seconds and then with pure water at room temperature for 30 seconds. The carrier foil was immersed in a 3 g/l carboxybenzotriazole solution maintained at 40°C for 30 seconds to form a release layer as shown in Fig. 6(b). The carrier foil was then washed with pure water at room temperature for 15 seconds.

(2) Formation of first surface layer

The carrier foil was immersed in a nickel plating bath having the composition shown below to conduct electrolysis to form a first surface layer which was a very thin nickel foil as shown in Fig. 6(c). The first surface layer was formed on the release layer which had been formed on the matte surface of the carrier foil. The current density was 5 A/dm$^2$, and the bath temperature was 50°C. A nickel electrode was used as a negative electrode, and a direct current power source was used. The thickness of the first surface layer was 3 $\mu$m in Example 2-1 and 1 $\mu$m in Example 2-2.
Nickel plating bath composition:

| | |
|---|---|
| $NiSO_4 \cdot 6H_2O$ | 250 g/l |
| $NiCl_2 \cdot 6H_2O$ | 45 g/l |
| $H_3BO_3$ | 30 g/l |

(3) Formation of active material layer

The carrier foil having the first surface layer thereon was washed with pure water for 30 seconds and dried in the air. A slurry containing active material particles was applied to the first surface layer to form an active material layer having a thickness of 15 $\mu$m as shown in Fig. 6(d). The active material particles were alloy power having a composition of Si 80%/Ni 20% and having an average particle size $D_{50}$ of 1.5 $\mu$m. The slurry contained the active material particles, nickel powder, acetylene black, and polyvinylidene fluoride (hereinafter "PVdF"). The slurry composition was active material:nickel powder:acetylene black:PVdF = 60:34:1:5.

(4) Formation of second surface layer

A second surface layer made of a very thin nickel foil was formed on the active material layer by electrolysis as shown in Fig. 6(e). The electrolysis conditions were the same as for the first surface layer formation, except that the deposit thickness was adjusted to 3 $\mu$m.

(5) Separation of electrode

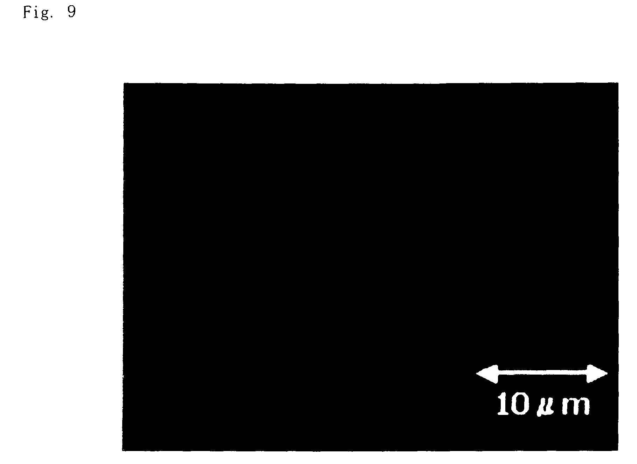

The electrode thus prepared was separated from the carrier foil as shown in Fig. 6(f) to give a negative electrode according to the present invention. The electron micrograph of a cut area of the negative electrode obtained in Example 2-1 is shown in Fig. 9.

EXAMPLES 2-3 AND 2-4

A negative electrode was obtained in the same manner as in Example 2-1 with the following exception. A very thin copper foil as a first surface layer was formed by electrolysis. The bath composition is shown below. The current density was 20 A/dm$^2$, and the bath temperature was 40°C. A dimensionally stabilized negative electrode was used. A direct current power source was used. The thickness of the first surface layer was 3 $\mu$m in Example 2-3 and 1 $\mu$m in Example 2-4. The first surface layer was treated with a 1 g/l benzotriazole solution maintained at 25°C for 10 seconds to give anticorrosion protection.

Copper plating bath composition:

| | |
|---|---|
| CuSO$_4$·5H$_2$O | 250 g/l |
| H$_2$SO$_4$ | 70 g/l |

EXAMPLE 2-5

The same slurry used in Example 2-1 was applied to each side of a 35 $\mu$m thick electrolytic copper foil to a thickness of 15 $\mu$m and dried to form active material layers. The copper foil was immersed in a nickel plating bath having the same composition as in Example 2-1 to carry out electrolysis thereby to form a very thin nickel foil as a surface layer on both sides. The electrolysis conditions were the same as in Example 2-1. The thickness of each surface layer was 3 $\mu$m. There was thus obtained a negative electrode shown in Fig. 8.

COMPARATIVE EXAMPLE 2-1

A slurry was prepared from graphite powder (average particle size D$_{50}$: 10 $\mu$m), acetylene black (average particle size D$_{50}$: 40 nm), PVdF, and N-methylpyrrolidone at a weight mixing ratio of 16:2:2:80. The slurry was applied to each side of a 35 $\mu$m thick copper foil and dried to form an active material layer on each side. The active material layers were roll pressed under a pressure of 0.5 t/cm to obtain a negative electrode in which the pressed active material layers each had a thickness of 40 $\mu$m.

COMPARATIVE EXAMPLE 2-2

The same slurry as used in Example 2-1 was applied to each side of a 35 $\mu$m thick copper foil to a thickness of 15 m and dried to obtain a negative electrode having an active material layer on both sides.

Performance evaluation:

Nonaqueous secondary batteries were assembled using each of the negative electrodes obtained in Examples and Comparative Examples as described below. The maximum negative electrode discharge capacity, battery capacity, and capacity retention at the 50th cycle of the resulting batteries were measured or calculated in accordance with the methods described below. The results obtained are shown in Table 2-1. Further, nonaqueous secondary batteries were assembled using each of the negative electrodes obtained in Example 2-1 and Comparative Examples 2-1 and 2-2 as a working electrode and metallic lithium as a counter electrode. The changes in discharge capacity with charge/discharge cycles were measured. The results obtained are shown in Table 12.

Assembly of nonaqueous secondary battery:

Each of the negative electrodes obtained in Examples and Comparative Examples as a working electrode and LiCoO$_2$ as a counter electrode were placed to face each other with a separator between them and assembled into a nonaqueous secondary battery in a usual manner by using the electrodes and an LiPF$_6$ solution in a mixture of ethylene carbonate and diethyl carbonate (1:1 by volume) as a nonaqueous electrolyte.

Maximum negative electrode discharge capacity:

The discharge capacity per weight of the active material at the cycle at which the maximum capacity was reached was measured. The unit is mAh/g.

Battery capacity:

The volume of the negative electrode was obtained from the thickness and area, from which the capacity per unit volume was calculated. The capacity of the battery using the electrode of Comparative Example 2-1 as a negative electrode was taken as 100, and the capacities of the other batteries were expressed relatively.

Capacity retention at 50th cycle:

The discharge capacity at the 50th cycle was measured. The value was divided by the maximum negative electrode discharge capacity obtained in the 2nd and the following cycles, and the quotient was multiplied by 100 to obtain a capacity retention at the 50th cycle.

TABLE 2-1

| | Active Material Composition | Material/Thickness of 1st Surface layer | Material/Thickness of 2nd Surface Layer | Maximum Negative Electrode Discharge Capacity (mAh/g) | Battery Capacity (vs. Comp. Ex. 1) | Capacity Retention at 50th Cycle (%) |
|---|---|---|---|---|---|---|
| Example 2-1 | $Si_{80}Ni_{20}$ | Ni/3 μm | Ni/3 μm | 3150 | 150 | 98 |
| Example 2-2 | $Si_{80}Ni_{20}$ | Ni/1 μm | Ni/3 μm | 3130 | 160 | 96 |
| Example 2-3 | $Si_{80}Ni_{20}$ | Cu/3 μm | Ni/3 μm | 3120 | 150 | 95 |
| Example 2-4 | $Si_{80}Ni_{20}$ | Cu/1 μm | Ni/3 μm | 3120 | 160 | 88 |
| Example 2-5 | $Si_{80}Ni_{20}$ | - | Ni/3 μm | 3150 | 120 | 98 |
| Comp. Example 2-1 | C | - | - | 300 | 100 | 100 |
| Comp. Example 2-2 | $Si_{80}Ni_{20}$ | - | - | 3140 | 130 | 15 |

EP 1 617 497 A1

As shown in Table 2-1, it is seen that the secondary batteries using the negative electrodes obtained in Examples have a higher maximum negative electrode discharge capacity, a higher battery capacity, and a higher capacity retention at the 50th cycle than those using the negative electrodes of Comparative Examples. As is apparent from the results shown in Fig. 12, the negative electrode of Example 2-1 keeps a high level of discharge capacity without suffering from a reduction on repeating charge/discharge cycles. In contrast, the negative electrode of Comparative Example 2-1 has an extremely low level of discharge capacity. The negative electrode of Comparative Example 2-2, which has a relatively high discharge capacity in the initial stage, shows a drastic reduction in discharge capacity with the charge/discharge cycles. The results of electron microscopic observation, while not shown in the Table, revealed that the negative electrodes of Examples 2-1 to 2-4 had their surface layer material penetrating into the whole thickness of the active material layer to electrically connect the two surface layers and that the negative electrode of Example 2-5 had its surface layer material penetrating into the whole thickness of the active material layers and electrically connecting to the copper foil. Furthermore, it was confirmed that the surface layers of the negative electrodes of Examples 2-1 to 2-5 have a great number of microvoids extending in the their thickness direction.

EXAMPLE 3-1

An electrolytically obtained copper carrier foil (thickness: 35 $\mu$m) was washed with an acid at room temperature for 30 seconds and then with pure water at room temperature for 30 seconds. The carrier foil was immersed in a tin plating bath having the following composition. Electrolysis was conducted to form a tin coat on the carrier foil. The current density was 2 A/dm$^2$, and the bath temperature was 30°C. A tin electrode was used as a positive electrode. A direct current power source was used as a power source. The coat was formed to a thickness of 20 nm. The carrier foil was pulled out of the plating bath, washed with pure water for 30 seconds, dried in the art, and allowed to stand for 15 minutes to oxidize the coat.

| | |
|---|---|
| $SnSO_4$ | 50 g/l |
| $H_2So_4$ | 100 g/l |
| Cresolsulfonic acid | 100 g/l |

The carrier foil having the coat formed thereon was immersed in a 3 g/1 carboxybenzotriazole solution kept at 40°C for 30 seconds to form a release layer. After formation of the release layer, the carrier foil was taken out of the solution and washed with pure water for 15 seconds.
The carrier foil was immersed in a Watts bath having the composition shown below to carry out electroplating thereby to form a first surface layer of nickel. The current density was 5 A/dm$^2$, and the bath temperature was 50°C. A nickel electrode was used as a negative electrode, and a direct current power source was used as a power source. The surface layer was formed to a thickness of 3 $\mu$m. The carrier foil with the first surface layer was pulled out of the plating bath, washed with pure water for 30 seconds, and dried in the air. The scanning electron micrograph of the thus formed surface layer and a photograph taken of that layer with light transmitted therethrough are shown in Figs. 9(a) and 9(b), respectively.

| | |
|---|---|
| $NiSO_4 \cdot 6H_2O$ | 250 g/l |
| $NiCl_2 \cdot 6H_2O$ | 45 g/l |
| $H_3BO_3$ | 30 g/l |

A slurry containing negative electrode active material particles was applied to the surface layer to a thickness of 15 $\mu$m to form an active material layer. The active material particles were an alloy having a composition of Si 80 wt% and Ni 20 wt% and an average particle size $D_{50}$ of 1.5 $\mu$m. The slurry composition was active material:Ni powder:acetylene black:polyvinylidene fluoride = 60:34:1:5.
A paste containing a carbonaceous material (acetylene black) having an average particle size $D_{50}$ of 40 nm was applied to the active material layer to a thickness of 0.5 $\mu$m. Subsequently, a second surface layer of nickel was formed thereon to a thickness of 3 $\mu$m by electroplating under the same conditions as described above.
Finally, the first surface layer and the carrier foil were separated apart to give a negative electrode for a nonaqueous secondary battery having the active material layer interposed between a pair of the surface layers.

Performance evaluation:

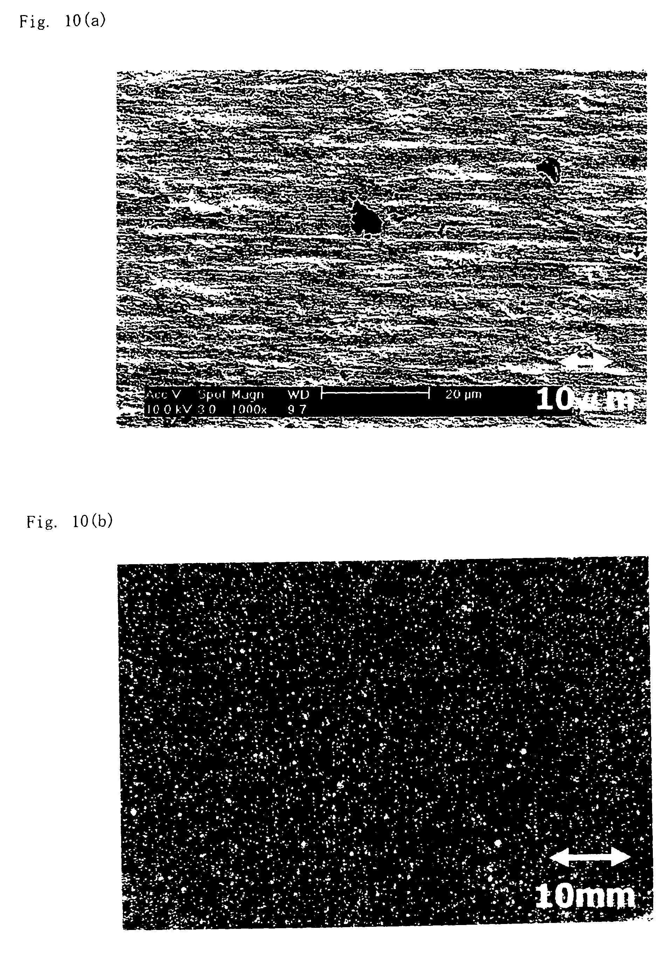

The negative electrode obtained in the Example was evaluated for the charging characteristics in accordance with the method described below. The results obtained are shown in Figs. 10(a) and 10(b). Fig. 10(a) represents the charging characteristics measured on the surface layer side having been separated from the carrier foil (i.e., the first surface layer side). Fig. 10(b) represents the charging characteristics measured on the plated side (i.e., the second surface layer side). The diameter and density of the microvoids formed in the first and second surface layers of the negative electrode obtained in the Example were measured in accordance with the following method. The results obtained are shown in Table 3-1 below.

Method of evaluating charging characteristics:

The negative electrode obtained in the Example as a working electrode and metallic lithium as a counter electrode were placed to face each other with a separator interposed between them and assembled into a nonaqueous secondary battery in a usual manner by using the electrodes and an $LiPF_6$ solution in a mixture of ethylene carbonate and diethyl carbonate (1:1 by volume) as a nonaqueous electrolyte. The resulting battery was evaluated under a charging condition of 0.2 mA/cm$^2$ and a voltage ranging from 0 to 2.8 V.

Method of measuring diameter and density of microvoids:

After the first surface layer was formed, the first surface layer was peeled from the carrier foil. The surface layer was irradiated with light from its back side at room temperature in a dark room, and the surface layer in this state was photographed. The photograph was analyzed by image processing to obtain the diameter and density of the microvoids.

## TABLE 3-1

| | 1st Metal Foil (carrier foil side) | | | 2nd Metal Foil (plated side) | | |
|---|---|---|---|---|---|---|
| | Density of Microvoids (/cm²) | | Thickness (μm) | Density of Microvoids (/cm²) | | Thickness (μm) |
| | Diameter of Microvoids: ≥0.01 μm, ≤10 μm | Diameter of Microvoids: >10 μm, ≤200 μm | | Diameter of Microvoids: ≥0.01 μm, ≤10 μm | Diameter of Microvoids: >10 μm, ≤200 μm | |
| Example 3-1 | 670 | 0 | 3 | 550 | 0 | 3 |

As is apparent from the results shown in Table 3-1 and Fig. 10, the negative electrode of the Example provides sufficient capacity on both the carrier foil side and the plated side. This means that the electrolyte in the negative electrode of the Example is sufficiently supplied to the active material layer through the first and the second surface layers.

EXAMPLE 4-1

(1) Preparation of active material particles

A molten metal at 1400°C containing 80% of silicon and 20% of nickel was cast into a copper-made mold and quenched to obtain an ingot of a silicon-nickel alloy. The ingot was ground in a jet mill and sieved to obtain active material particles. The resulting active material particles were poured into 20% KOH and etched for 20 minutes. The average particle size, the total oxygen concentration, and the O/Si ratio in the outermost surface of the active material particles are shown in Table 4-1.

(2) Preparation of slurry

A slurry having the following composition was prepared.

| | |
|---|---|
| Active material particles obtained in (1) above | 16% |
| Acetylene black (particle size: 0.1 $\mu$m) | 2% |
| Binder (polyvinylidene fluoride) | 2% |
| Diluting solvent (N-methylpyrrolidone) | 80% |

(3) Formation of first surface layer for current collection

A release layer of carboxybenzotriazole was formed on a 35 $\mu$m thick copper carrier foil as shown in Fig. 6(b). The release layer was plated with Ni to form a 3 $\mu$m thick first current collecting surface layer as shown in Fig. 6(c).

(4) Formation of active material layer

The slurry was applied to the first current collecting surface layer and dried as shown in Fig. 6(d). The coating layer thickness after drying was 10 $\mu$m.

(5) Formation of second surface layer for current collection

The active material layer was plated with Ni to form a 3 $\mu$m thick second current collecting surface layer as shown in Fig. 6(e).

(6) Separation of copper carrier foil

The copper carrier foil was separated from the first current collecting surface layer at the release layer as shown in Fig. 6(f) to give a negative electrode having the structure shown in Fig. 1.

EXAMPLE 4-2

Active material particles were prepared in the same manner as in Example 4-1, except for replacing KOH as an etchant with HF. The HF concentration was 5%, and the etching time was 10 minutes. Thereafter the same procedure as in Example 4-1 was repeated to obtain a negative electrode.

EXAMPLE 4-3

Active material particles were prepared in the same manner as in Example 4-1, except for replacing KOH as an etchant with $NH_4F$. The $NH_4F$ concentration was 5%, and the etching time was 10 minutes. Thereafter the same procedure as in Example 4-1 was repeated to obtain a negative electrode.

EXAMPLE 4-4

Active material particles were prepared in the same manner as in Example 4-1, except for replacing KOH as an etchant with hydrazine. The hydrazine concentration was 1%, and the etching time was 60 minutes. Thereafter the same procedure as in Example 4-1 was repeated to obtain a negative electrode.

EXAMPLES 4-5 AND 4-6

The active material particles obtained in Example 4-1 were electroless plated with Ni to form a thin Ni film, the thickness of which is shown in Table 4-2. Thereafter, the same procedure as in Example 4-1 was repeated to obtain a negative electrode. The electroless plating bath had the following composition.

$NiSO_4·6H_2O$     25 g/l
$NaH_2PO_2·H_2O$     20 g/l
$Na_3C_6H_5O_7$     25 g/l
$NaC_3H_5O_2$     10 g/l

EXAMPLES 4-7 AND 4-8

The active material particles obtained in Example 4-2 were electroless plated with Ni to form a thin Ni film, the thickness of which is shown in Table 4-2. Thereafter, the same procedure as in Example 4-1 was repeated to obtain a negative electrode. The electroless plating bath had the same composition as in Example 4-5.

EXAMPLE 4-9

A slurry was prepared in the same manner as in Example 4-1, except for using the active material particles obtained in Example 4-8. The resulting slurry was applied to each side of a 18 $\mu$m thick copper foil and dried. The dried active material layers each had a thickness of 10 $\mu$m. The copper foil having the active material layers formed thereon was immersed in an Ni plating bath to deposit Ni on each active material layer by electroplating. There was thus obtained a negative electrode having the structure shown in Fig. 8.

Performance Evaluation:

Nonaqueous secondary batteries were assembled as described below by using each of the negative electrodes obtained in Examples. The resulting batteries were evaluated by measuring the maximum discharge capacity and the capacity retention at the 50th cycle in accordance with the above-described methods. The results obtained are shown in Tables 4-1 and 4-2 below. Further, the plating current efficiency in forming the second current collecting surface layer in the production of the negative electrodes of Examples 4-5 through 4-7 was obtained. Plating current efficiency gets closer to 100% according as the oxygen concentration of the active material particles decreases.

Assembly of nonaqueous secondary battery:

Each of the above-prepared negative electrodes as a working electrode and metallic lithium as a counter electrode were placed to face each other with a separator between them. A nonaqueous secondary battery was assembled in a usual manner by using the electrodes and an $LiPF_6$ solution in a mixture of ethylene carbonate and diethyl carbonate (1:1 by volume) as a nonaqueous electrolyte.

## TABLE 4-1

| | Average Particle Size $D_{50}$ (μm) | Composition | Oxygen Concentration | | Electrode Charge/Discharge Characteristics | |
|---|---|---|---|---|---|---|
| | | | Total[*1] (wt%) | O/Si Ratio[*2] in Outermost Surface | Max. Discharge Capacity (mAh/g) | Capacity Retention at 50th Cycle (%) |
| Example 4-1 | 2.5 | Si80+Ni20 | 0.7 | 0.4 | 2500 | 95 |
| Example 4-2 | 2.0 | Si80+Ni20 | 0.5 | 0.3 | 2500 | 97 |
| Example 4-3 | 2.0 | Si80+Ni20 | 0.5 | 0.3 | 2500 | 97 |
| Example 4-4 | 2.5 | Si80+Ni20 | 0.7 | 0.4 | 2500 | 95 |

*1: Oxygen gas analysis; *2: Auger electron spectroscopy; *3: No etching

EP 1 617 497 A1

TABLE 4-2

| | Average Particle Size[3] $D_{50}$ (µm) | Composition | Oxygen Concentration | | Thickness of Thin Metal Coat (µm) | Plating Current Efficiency (%) | Electrode Charge/Discharge Characteristics | |
|---|---|---|---|---|---|---|---|---|
| | | | Total[1] (wt%) | O/Si Ratio in Interface with Thin Metal Coat (µm) | | | Max. Discharge Capacity (mAh/g) | Capacity Retention at 50th Cycle (%) |
| Example 4-5 | 2.5 | Si80+Ni20 | 0.7 | 0.4 | 0.05 | 85 | 2500 | 96 |
| Example 4-6 | 2.5 | Si80+Ni20 | 0.7 | 0.4 | 0.5 | 88 | 2500 | 97 |
| Example 4-7 | 2.0 | Si80+Ni20 | 0.5 | 0.3 | 0.05 | 87 | 2500 | 98 |
| Example 4-8 | 2.0 | Si80+Ni20 | 0.5 | 0.3 | 0.5 | 90 | 2500 | 98 |
| Example 4-9[4] | 2.0 | Si80+Ni20 | 0.5 | 0.3 | 0.5 | 90 | 2500 | 98 |

*1: Oxygen gas analysis; *2: Auger electron spectroscopy; *3: Measured before metal coating; *4: Negative electrodes of the structure shown in Fig. 8 were prepared.

As is apparent from the results in Tables 4-1 and 4-2, the batteries of the Examples all exhibit a high maximum discharge capacity and a high capacity retention.

Industrial Applicability:

The negative electrode for a nonaqueous secondary battery according to the present invention has the active material embedded inside the electrode. Not exposed on the electrode surface, the active material is prevented from falling off, and the active material current collecting performance can be assured after repetition of charges and discharges. With this it is effectively prevented that part of the active material becomes electrically isolated, and sufficient current collecting performance can be obtained. A secondary battery using the negative electrode provides high charge and discharge capacities from the initial stage of charge/discharge cycles. Deterioration through repetition of charge and discharge is suppressed, resulting in a markedly extended cycle life and an increased charge and discharge efficiency. Besides, since an electro-conductive metal foil layer as a core, i.e., a current collector that has been used in conventional negative electrodes is not used in the invention, the proportion of the active material in the negative electrode can be raised as compared with the conventional negative electrodes. As a result, the present invention provides a negative electrode for a secondary battery having a high energy density per unit volume and unit weight.

**Claims**

1. A negative electrode for a nonaqueous secondary battery comprising a pair of current collecting surface layers of which the surfaces are adapted to be brought into contact with an electrolyte and at least one active material layer interposed between the surface layers, the active material layer containing particles of an active material having high capability of forming a lithium compound.

2. The negative electrode for a nonaqueous secondary battery according to claim 1, wherein the material making up the surfaces is present over the whole thickness of the active material layer to electrically connect the two surfaces so that the negative electrode has a current collecting function as a whole.

3. The negative electrode for a nonaqueous secondary battery according to claim 1, wherein the surface layers each have a thickness of 0.3 to 10 $\mu$m.

4. The negative electrode for a nonaqueous secondary battery according to claim 1, wherein the surface layers are each comprise a metallic material having low capability of forming a lithium compound.

5. The negative electrode for a nonaqueous secondary battery according to claim 1, wherein the surface layers each comprise copper, nickel, iron, cobalt or an alloy of these metals.

6. The negative electrode for a nonaqueous secondary battery according to claim 1, wherein the surface layers are layers formed by electroplating.

7. The negative electrode for a nonaqueous secondary battery according to claim 1, wherein the surface layers have a large number of microvoids extending in the thickness direction of the surface layers and allowing a nonaqueous electrolyte to penetrate therethrough.

8. The negative electrode for a nonaqueous secondary battery according to claim 7, wherein in that the microvoids lead to the active material layer, the microvoids of at least one of the surface layers have an average opening area of 0.1 to 50 $\mu$m$^2$ and an open area ratio of 0.1 to 20%, and the negative electrode has no thick conductor for current collection.

9. The negative electrode for a nonaqueous secondary battery according to claim 1, wherein the active material particles comprise particles of a silicon material or a tin material.

10. The negative electrode for a nonaqueous secondary battery according to claim 9, wherein the active material particles are particles of single silicon or single tin.

11. The negative electrode for a nonaqueous secondary battery according to claim 9, wherein the active material particles are mixed particles of at least single silicon or single tin and carbon, the mixed particles comprising 10 to 90% by weight of silicon or tin and 10 to 90% by weight of carbon.

12. The negative electrode for a nonaqueous secondary battery according to claim 9, wherein the active material particles are mixed particles of silicon or tin and a metal, the mixed particles containing 30 to 99.9% by weight of silicon or tin and 0.1 to 70% by weight of at least one element selected from the group consisting of Cu, Ag, Li, Ni, Co, Fe, Cr, Zn, B, Al, Ge, Sn, Si, In, V, Ti, Y, Zr, Nb, Ta, W, La, Ce, Pr, Pd, and Nd, provided that Sn is excluded from the group where the particles contain tin and that Si is excluded from the group where the particles contain silicon.

13. The negative electrode for a nonaqueous secondary battery according to claim 9, wherein the active material particles are particles of a silicon compound or a tin compound, the silicon compound particles or tin compound particles containing 30 to 99.9% by weight of silicon or tin and 0.1 to 70% by weight of at least one element selected from the group consisting of Cu, Ag, Li, Ni, Co, Fe, Cr, Zn, B, Al, Ge, Sn, Si, In, V, Ti, Y, Zr, Nb, Ta, W, La, Ce, Pr, Pd, and Nd, provided that Sn is excluded from the group where the particles contain tin and that Si is excluded from the group where the particles contain silicon.

14. The negative electrode for a nonaqueous secondary battery according to claim 9, wherein the active material particles are mixed particles of silicon compound particles or tin compound particles and metal particles,
the mixed particles containing 30 to 99.9% by weight of the silicon compound particles or tin compound particles and 0.1 to 70% by weight of particles of at least one element selected from the group consisting of Cu, Ag, Li, Ni, Co, Fe, Cr, Zn, B, Al, Ge, Sn, Si, In, V, Ti, Y, Zr, Nb, Ta, W, La, Ce, Pr, Pd, and Nd, provided that Sn is excluded from the group where the particles contain tin and that Si is excluded from the group where the particles contain silicon, and
the silicon compound particles or tin compound particles containing 30 to 99.9% by weight of silicon or tin and 0.1 to 70% by weight of at least one element selected from the group consisting of Cu, Ag, Li, Ni, Co, Fe, Cr, Zn, B, Al, Ge, Sn, Si, In, V, Ti, Y, Zr, Nb, Ta, W, La, Ce, Pr, Pd, and Nd, provided that Sn is excluded from the group where the particles contain tin and that Si is excluded from the group where the particles contain silicon.

15. The negative electrode for a nonaqueous secondary battery according to claim 9, wherein the active material particles are metal-coated particles of single silicon or single tin, the metal being at least one element selected from the group consisting of Cu, Ag, Ni, Co, Fe, Cr, Zn, B, Al, Ge, Sn, Si, In, V, Ti, Y, Zr, Nb, Ta, W, La, Ce, Pr, Pd, and Nd, provided that Sn is excluded from the group where the particles contain tin and that Si is excluded from the group where the particles contain silicon, and the particles containing 30 to 99.9% by weight of silicon or tin and 0.1 to 70% by weight of the metal.

16. The negative electrode for a nonaqueous secondary battery according to claim 1, wherein the active material particles contain silicon, have an average particle diameter ($D_{50}$) of 0.1 to 10 $\mu$m, and have an oxygen concentration of less than 2.5% by weight, and the silicon concentration in the outermost surface of the particles is higher than 1/2 of the oxygen concentration in the outermost surface of the particles.

17. The negative electrode for a nonaqueous secondary battery according to claim 1, wherein the active material particles have a maximum particle size of 50 $\mu$m or smaller.

18. The negative electrode for a nonaqueous secondary battery according to claim 1, wherein the active material layer is a layer formed by applying an electro-conductive slurry containing the active material particles.

19. The negative electrode for a nonaqueous secondary battery according to claim 1, which has no electro-conductive metal foil layers as a core in the middle of the thickness thereof and has a total thickness of 2 to 50 $\mu$m.

20. The negative electrode for a nonaqueous secondary battery according to claim 1, which has an electro-conductive metal foil layer as a core in the middle of the thickness thereof, the active material layer formed on both sides of the metal foil layer, and the current collecting surface layers covering the respective active material layers, and has a total thickness of 10 to 100 $\mu$m.

21. A process of producing a negative electrode for a nonaqueous secondary battery, which is a process of producing the negative electrode for a nonaqueous secondary battery according to claim 1, comprising:

applying an electro-conductive slurry containing active material particles on a carrier foil to form an active material layer,

immersing the carrier foil having the active material layer formed thereon in a plating bath containing a metallic material to conduct electroplating to form an electrode containing the active material layer, and

separating the electrode from the carrier foil.

22. The process for producing a negative electrode for a nonaqueous secondary battery according to claim 21, which comprises electroplating the carrier foil with a metallic material having low capability of forming a lithium compound to form a first current collecting surface layer before the formation of the active material layer, forming the active material layer on the first current collecting surface layer, electroplating the active material layer with a metallic material having low capability of forming a lithium compound to form a second current collecting surface layer, and separating the carrier foil from the first current collecting surface layer.

23. The process for producing a negative electrode for a nonaqueous secondary battery according to claim 22, wherein a coat made of a material different from the material of the first current collecting surface layer is formed on the carrier foil to a thickness of 0.001 to 1 $\mu$m before the formation of the first current collecting surface layer, and the material of the first current collecting surface layer is electrodeposited on the carrier foil having the coat by electroplating to form the first current collecting surface layer.

24. A process of producing a negative electrode for a nonaqueous secondary battery, which is a process of producing the negative electrode for a nonaqueous secondary battery according to claim 1, comprising:

treating a carrier resin having a large number of cation exchange groups on the surface thereof with a metal ion-containing solution to form a metal salt of the cation exchange groups,

reducing the metal salt to form on the surface of the carrier resin a coating film of the metal serving as a catalyst nucleus,

electroplating the coating film with a metallic material having low capability of forming a lithium compound to form a first current collecting surface layer,

applying an electro-conductive slurry containing active material particles to the first current collecting surface layer to form an active material layer,

electroplating the active material layer with a metallic material having low capability of forming a lithium compound to form a second current collecting surface, and

separating the carrier resin from the first current collecting surface layer by peeling or dissolution.

25. A process of producing a negative electrode for a nonaqueous secondary battery, which is a process of producing the negative electrode for a nonaqueous secondary battery according to claim 20, comprising:

applying an electro-conductive slurry containing active material particles to each side of an electro-conductive metal foil to form active material layers,

immersing the electro-conductive metal foil having the active material layers formed thereon in a plating bath containing a metallic material having low capability of forming a lithium compound to conduct electroplating.

26. A nonaqueous secondary battery having the negative electrode for a nonaqueous secondary battery according to claim 1.

## Fig.1

## Fig.4(a)

## Fig.4(b)

## Fig.4(c)

## Fig.4(d)

Fig.6(a)        Fig.6(b)        Fig.6(c)

Fig.6(d)        Fig.6(e)        Fid.6(f)

Fig.7(a)        Fig.7(b)        Fig.7(c)

Fig.7(d)        Fig.7(e)

# Fig.8

# Fig.11(a)

# Fig.11(b)

# Fig.12

Fig. 2

Fig. 3

300μm

Fig. 5(a)

Fig. 5(b)

Fig. 9

10 μm

Fig. 10(a)

Fig. 10(b)

## INTERNATIONAL SEARCH REPORT

| | |
|---|---|
| International application No. PCT/JP03/16186 | |

**A. CLASSIFICATION OF SUBJECT MATTER**
Int.Cl$^7$ H01M4/02, H01M4/38, H01M4/04, H01M10/40, H01M4/64

According to International Patent Classification (IPC) or to both national classification and IPC

**B. FIELDS SEARCHED**

Minimum documentation searched (classification system followed by classification symbols)
Int.Cl$^7$ H01M4/00-4/04, H01M4/36-4/62, H01M10/40

Documentation searched other than minimum documentation to the extent that such documents are included in the fields searched
| | | | |
|---|---|---|---|
| Jitsuyo Shinan Koho | 1922–1996 | Toroku Jitsuyo Shinan Koho | 1994–2004 |
| Kokai Jitsuyo Shinan Koho | 1971–2004 | Jitsuyo Shinan Toroku Koho | 1996–2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 08-050922 A (Canon Inc.), 20 February, 1996 (20.02.96), Full text | 1,2,4-6, 9-15,18-20, 26 |
| Y | & EP 690517 A1 & US 6051340 A | 1-26 |
| Y | JP 2002-289178 A (Sanyo Electric Co., Ltd.), 04 October, 2002 (04.10.02), Full text & US 2002/168572 A | 1-26 |
| Y | WO 02/21616 A1 (Sanyo Electric Co., Ltd.), 14 March, 2002 (14.03.02), Full text & AU 8256901 A & EP 1335438 A1 | 1-26 |

| | | | |
|---|---|---|---|
| ☒ Further documents are listed in the continuation of Box C. | | ☐ See patent family annex. | |

| | |
|---|---|
| * Special categories of cited documents: "A" document defining the general state of the art which is not considered to be of particular relevance "E" earlier document but published on or after the international filing date "L" document which may throw doubts on priority claim(s) or which is cited to establish the publication date of another citation or other special reason (as specified) "O" document referring to an oral disclosure, use, exhibition or other means "P" document published prior to the international filing date but later than the priority date claimed | "T" later document published after the international filing date or priority date and not in conflict with the application but cited to understand the principle or theory underlying the invention "X" document of particular relevance; the claimed invention cannot be considered novel or cannot be considered to involve an inventive step when the document is taken alone "Y" document of particular relevance; the claimed invention cannot be considered to involve an inventive step when the document is combined with one or more other such documents, such combination being obvious to a person skilled in the art "&" document member of the same patent family |

| Date of the actual completion of the international search 13 April, 2004 (13.04.04) | Date of mailing of the international search report 27 April, 2004 (27.04.04) |
|---|---|
| Name and mailing address of the ISA/ Japanese Patent Office | Authorized officer |
| Facsimile No. | Telephone No. |

Form PCT/ISA/210 (second sheet) (July 1998)

## INTERNATIONAL SEARCH REPORT

International application No.

PCT/JP03/16186

C (Continuation). DOCUMENTS CONSIDERED TO BE RELEVANT

| Category* | Citation of document, with indication, where appropriate, of the relevant passages | Relevant to claim No. |
|---|---|---|
| Y | JP 08-171901 A (Canon Inc.),<br>02 July, 1996 (02.07.96),<br>Claim 1<br>& EP 709907 A1 & US 5698339 A | 7,8 |
| Y | JP 11-135120 A (Kao Corp.),<br>21 May, 1999 (21.05.99),<br>Claims 1 to 7<br>(Family: none) | 11-15,17 |
| Y | JP 08-250113 A (Honjo Kinzoku Kabushiki Kaisha),<br>27 September, 1996 (27.09.96),<br>Claim 1<br>(Family: none) | 21-25 |
| Y | JP 08-124579 A (Sumitomo Electric Industries, Ltd.),<br>17 May, 1996 (17.05.96),<br>Claims 1 to 4<br>(Family: none) | 21-25 |
| Y | JP 2001-073159 A (Nippon Rironaru Kabushiki Kaisha),<br>21 March, 2001 (21.03.01),<br>Claims 1, 2<br>(Family: none) | 24 |
| A | WO 01/039303 A1 (Moltech Corp.),<br>31 May, 2001 (31.05.01),<br>& JP 2003-515892 A & EP 1234348 A1<br>& EP 1236231 A1 & US 2002/12846 A1 | 1-26 |
| A | JP 2002-015729 A (Toshiba Corp.),<br>18 January, 2002 (18.01.02),<br>(Family: none) | 1-26 |
| A | JP 2002-042783 A (Sanyo Electric Co., Ltd.),<br>08 February, 2002 (08.02.02),<br>& US 2002/34687 A1 | 1-26 |
| A | JP 08-213008 A (Canon Inc.),<br>20 August, 1996 (20.08.96),<br>& EP 715366 A1 & US 6063142 A | 1-26 |
| A | JP 08-037000 A (Mitsubishi Cable Industries, Ltd.),<br>06 February, 1996 (06.02.96),<br>(Family: none) | 1-26 |

Form PCT/ISA/210 (continuation of second sheet) (July 1998)